# EUROPEAN PATENT SPECIFICATION

(11) **EP 3 417 657 B1**
(45) Date of publication and mention of the grant of the patent: **11.11.2020**
(21) Application number: 16705755.3
(22) Date of filing: 15.02.2016
(51) Int. Cl.: H04W 48/20, H04W 36/08, H04W 84/04

(54) **RADIO NETWORK NODE, WIRELESS DEVICE AND METHODS PERFORMED THEREIN**
FUNKNETZWERKKNOTEN, DRAHTLOSE VORRICHTUNG UND DARIN AUSGEFÜHRTE VERFAHREN
NOEUD DE RÉSEAU RADIO, DISPOSITIF SANS FIL ET PROCÉDÉS RÉALISÉS DANS CES DERNIERS

(43) Date of publication of application: 26.12.2018
(73) Proprietor: Telefonaktiebolaget LM Ericsson (PUBL), 164 83 Stockholm (SE)
(72) Inventor: ZEE, Oscar, 118 67 Stockholm (SE); MÜLLER, Walter, 194 62 Upplands Väsby (SE); MYHRE, Elena, 177 70 Järfälla (SE); VIKBERG, Jari, 153 38 Järna (SE)
(74) Representative: Ericsson
(86) International application number: PCT/EP2016/053185
(87) International publication number: WO 2017/140342

(56) References cited:
- EP-A1- 2 421 302
- "NGMN_5G_White_Paper_V1_0", ETSI DRAFT; NGMN_5G_WHITE_PAPER_V1_0, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M - Open, 25 June 2015 (2015-06-25), pages 1-125, XP014258882, [retrieved on 2015-06-25]
- DEUTSCHE TELEKOM AG ET AL: "Requirements for Next Generation Access Technologies", 3GPP DRAFT; RPA160003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Barcelona, Spain; 20160128 - 20160129 27 January 2016 (2016-01-27), XP051053203, Retrieved from the Internet: URL:http://www.3gpp.org/ftp/Meetings_3GPP_ SYNC/RAN/Docs/ [retrieved on 2016-01-27]
- "3rd Generation Partnership Project; Technical Specification Group Services and System Aspects; Feasibility Study on New Services and Markets Technology Enablers - Network Operation; Stage 1 (Release 14)", 3GPP DRAFT; S1-154455 NEO TR 22.XXX V0.2.0 CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 January 2016 (2016-01-27), XP051053266, Retrieved from the Internet: URL:http://www.3gpp.org/ftp/Meetings_3GPP_ SYNC/RAN/Docs/ [retrieved on 2016-01-27]

## Description

### TECHNICAL FIELD

Embodiments herein relate to a wireless device, a radio network node and methods performed therein for communication. Furthermore, a computer program and a computer readable storage medium are also provided herein. In particular, embodiments herein relate to handling mobility of the wireless device in a communication network.

### BACKGROUND

In a typical communication network, wireless devices, also known as wireless communication devices, mobile stations, stations (STA) and/or user equipments (UE), communicate via a Radio Access Network (RAN) to one or more core networks (CN). The RAN covers a geographical area which is divided into service areas or cell areas, with each service area or cell area being served by a radio network node such as a radio access node e.g., a Wi-Fi access point or a radio base station (RBS), which in some networks may also be denoted, for example, a "NodeB" or "eNodeB". A service area or cell area is a geographical area where radio coverage is provided by the radio network node. The radio network node communicates over an air interface operating on radio frequencies with the wireless device within range of the radio network node.

A Universal Mobile Telecommunications System (UMTS) is a third generation (3G) telecommunication network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

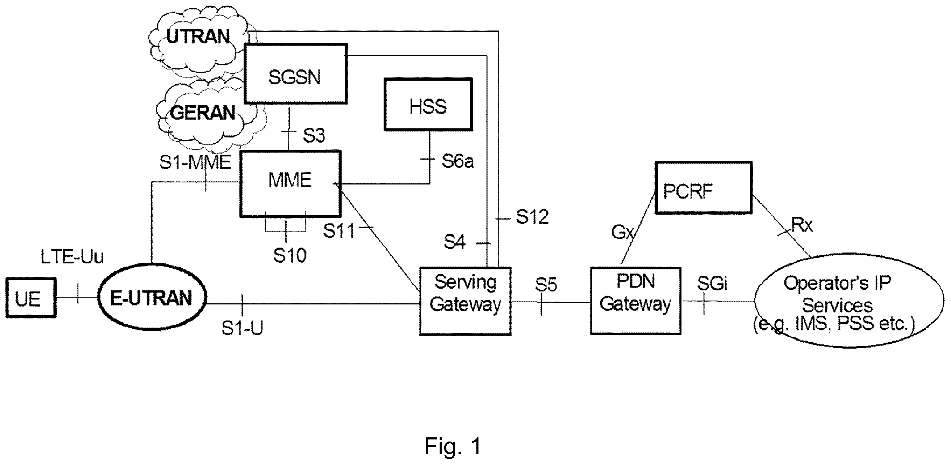

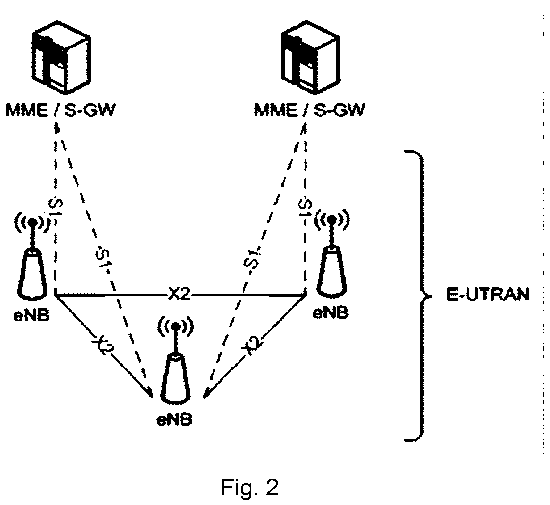

Specifications for the Evolved Packet System (EPS), also called a Fourth Generation (4G) network, have been completed within the 3^{rd} Generation Partnership Project (3GPP) and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface. EPS is the Evolved 3GPP Packet Switched Domain. Fig. 1 is an overview of the EPC architecture. This architecture is defined in 3GPP TS 23.401 v.13.4.0 wherein a definition of a Packet Data Network Gateway (P-GW), a Serving Gateway (S-GW), a Policy and Charging Rules Function (PCRF), a Mobility Management Entity (MME) and a wireless or mobile device (UE) is found. The LTE radio access, E-UTRAN, comprises one or more eNBs. Fig. 2 shows the overall E-UTRAN architecture and is further defined in for example 3GPP TS 36.300 v.13.1.0. The E-UTRAN comprises eNBs, providing a user plane comprising the protocol layers Packet Data Convergence Protocol (PDCP)/Radio Link Control (RLC)/Medium Access Control (MAC)/Physical layer (PHY), and a control plane comprising Radio Resource Control (RRC) protocol in addition to the user plane protocols towards the wireless device. The radio network nodes are interconnected with each other by means of the X2 interface. The radio network nodes are also connected by means of the S1 interface to the EPC, more specifically to the MME by means of an S1-MME interface and to the S-GW by means of an S1-U interface.

The S1-MME interface is used for control plane between eNodeB/E-UTRAN and MME. The main protocols used in this interface are S1 Application Protocol (S1-AP) and Stream Control Transmission Protocol (SCTP). S1AP is the application layer protocol between the radio network node and the MME and SCTP for example guarantees delivery of signaling messages between MME and the radio network node. The transport network layer is based on Internet Protocol (IP).

A subset of the S1 interface provided functions are:
- S1-interface management functions such as S1 setup, error indication, reset and the radio network node and MME configuration update.
- UE Context Management functionality such as Initial Context Setup Function and UE Context Modification Function.
- E-UTRAN Radio Access Bearer (E-RAB) Service Management functions e.g.

Setup, Modify, Release.
- Mobility Functions for wireless devices in EPS Connection Management (ECM)-CONNECTED, e.g. Intra-LTE Handover and inter-3GPP-Radio Access Technology (RAT) Handover.
- S1 Paging function.
- Non Access Stratum (NAS) Signaling Transport function.

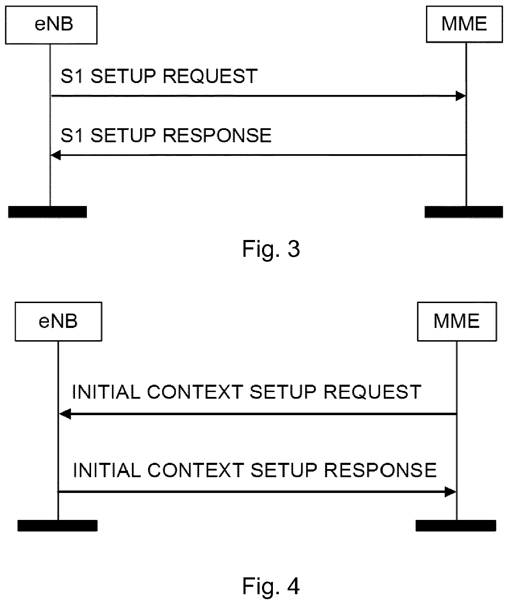

Establishment of the S1-MME interface on S1AP protocol level is shown in Fig. 3 as the S1 setup procedure. The purpose of the S1 Setup procedure is to exchange application level data needed for the radio network node and the MME to correctly interoperate on the S1 interface. The radio network node may initiate the procedure by sending an S1 SETUP REQUEST message to the MME once it has gained IP connectivity and it has been configured with at least one Tracking Area Indicator (TAI). The TAI(s) are used by the radio network node to locate IP-addresses of the different MMEs, possibly in different MME pools. The radio network node includes its global radio network node identity and other information in the S1 SETUP REQUEST message. The MME responds with an S1 SETUP RESPONSE message. This S1 SETUP RESPONSE message includes for example the Globally Unique MME identifier(s) (GUMMEI) of the MME.

An Initial Context Setup process is shown in Fig. 4. An INITIAL CONTEXT SETUP REQUEST message is sent by the MME to request the setup of a UE context or context of a wireless device. This INITIAL CONTEXT SETUP REQUEST message comprises information related to both the UE context and different E-RABs to be established. For each E-RAB the MME includes E-RAB Quality of Service (QoS) parameters such as QoS Class Identifier (QCI) and Allocation and Retention Priority (ARP). The QCI is a scalar that is used as a reference to radio access node-specific parameters that control bearer level packet forwarding treatment, e.g. scheduling weights, admission thresholds, queue management thresholds, link layer protocol configuration, etc., and that have been preconfigured by the operator owning the radio network node. An INITIAL CONTEXT SETUP RESPONSE message is sent by eNB to the MME confirming the setup. Current assumption is that the RAN-CN split is similar for 5G as for 4G, implying an (evolved) S1 interface.

### Radio Resource Control (RRC) states

RRC, which is terminated in the radio network node on the network side from the wireless device, performs functions like:
- Broadcast
- Paging
- RRC connection management
- Resource Block (RB) control
- Mobility functions
- Wireless device measurement reporting and control

The RRC states are:
- RRC_IDLE
- RRC_CONNECTED

A wireless device is in the RRC_CONNECTED state when an RRC connection has been established between the wireless device and the radio network node. If this is not the case, i.e. no RRC connection is established, the wireless device is in the RRC_IDLE state.
*EPS Mobility Management (EMM) and EPS Connection Management (ECM) states* The EPS Mobility Management (EMM) states describe the Mobility Management states that result from the mobility management procedures e.g. Attach and Tracking Area Update procedures.

Two major EMM states are:
- EMM-DEREGISTERED
- EMM-REGISTERED.
The EPS Connection Management (ECM) states describe the signaling connectivity between the wireless device and the EPC, which includes both RRC connection between the wireless device and radio network node and S1 connection, i.e. S1AP association, between radio network node and MME.

Two major ECM states are:
- ECM-IDLE.
- ECM-CONNECTED.

In general, the ECM and EMM states are independent of each other. Transition from EMM-REGISTERED to EMM-DEREGISTERED can occur regardless of the ECM state, e.g. by explicit detach signaling in ECM-CONNECTED or by implicit detach locally in the MME during ECM-IDLE. However there are some relations, e.g. to transition from EMM-DEREGISTERED to EMM-REGISTERED the wireless device has to be in the ECM-CONNECTED state.

The wireless communication industry is at the verge of a unique business crossroads. The growing gap between capacity and demand is an urgent call for new approaches and alternative network technologies to enable mobile operators to achieve more with less. Today, mobile broadband data is growing at an annual rate of 40-50 percent per year in the U.S. and other regions globally. Mobile service providers address these rapidly expanding traffic volumes through deployment of additional network functions, which will be a significant capital expenditure (CAPEX) challenge. The nature of the mobile broadband data traffic is also evolving with new services including new video applications, connected cars and the Internet of Things (loT). This rapid capacity growth and increasing traffic diversity in LTE networks stresses the assumptions of existing network architectures and operational paradigms.

Network Functions Virtualization (NFV) provides a new path that can increase the flexibility required by mobile service providers and network operators to adapt and accommodate this dynamic market environment. NFV is a new operational approach applying well-known virtualization technologies to create a physical Commercial Off-the-Shelf (COTS) distributed platform for the delivery of end-to-end services in the context of the demanding environment of telecom network infrastructure and applications.

Because EPC is critical to the realization and management of all LTE traffic, it is important to consider use cases related to virtualization of the EPC elements. Each individual EPC element also has specific considerations that determine whether to deploy with NFV. Virtualized EPC (vEPC) is a good example: Multiple virtualized network functions (VNF) can be deployed and managed on a Network Functions Virtualization Infrastructure (NFVI) but must cater to performance scalability in both signaling/control plane and user plane, each potentially demanding different levels of NFVI resources.

vEPC elements can benefit from more agile deployment and scalability. However, virtual resource monitoring and orchestration, along with service awareness, are essential for implementing elasticity effectively. Due to the nature of telecom networks, service Level Agreements (SLA) will be a key issue for a virtualized mobile core network. Because virtualization usually leads to a performance trade-off, equipment vendors must optimize data-plane processing to satisfy carrier-grade bandwidth and latency requirements and sufficient control-plane performance for SLAs needed to ensure availability of regulatory services, such as emergency calls.

VNF is a virtualized network function which serves as a VNF Software for providing virtual network capabilities. A VNF could be decomposed and instantiated in roles such as Virtualized MME (vMME), Virtualized PCRF (vPCRF), Virtualized SGW (vSGW) or Virtualized PDN-GW (vPDN-GW).

NFV is seen as an enabler for network slicing that is described herein.

When looking at the wide range of applications and use cases that are addressed with a 5G network, it is quite obvious these cannot effectively be addressed with a traditional approach of having a purpose built network for each application. This will lead to high cost for networks and devices as well as inefficient use of valuable frequency resources. An operator may have one physical network infrastructure and one pool of frequency bands, which may support many separate virtualized networks, also called network slices. Each network slice may have unique characteristics for meeting the specific requirements of the use case/s it serves.

The Next Generation Mobile Networks (NGMN) 5G White Paper, a deliverable by the NGMN Alliance, published 25.06.2015, makes proposals concerning the 5G architecture. In particular, it is proposed that network slicing will be supported. A slice supports communication service of a paticular connection type for a particular service. For this, a 5G slice is composed of a collection of 5G network functions and RAT settings which are combined together for a specific use.

Similarly, 3GPP contribution RPA 160003 teaches some requirements for next generation access technologies. These include network slicing allowing different logical networks depending on requirements of each slice. This can be different for each slice. Each slice has separate operation and management.

A key function of 5G Core network is to allow for flexibility in network service creation, making use of different network functions suitable for the offered service in a specific network slice, e.g. Evolved Mobile Broadband (MBB), Massive Machine Type Communication (MTC), Critical MTC, Enterprise, etc.

In addition to Service optimized networks there are more drivers for Network slicing, such as;
- **Business expansion by low initial investment:** Given the physical infrastructure it is much easier to instantiate another Packet Core instance for the business expansion than to set up a new parallel infrastructure or even integrated nodes
- **Low risk by no/limited impact on legacy:** As the new instance is logically separated from the other network slices, the network slices can also provide resource isolation between each other. Thus introduction of a new isolated network slice will not impact the existing operator services and therefore only provide low risk
- **Short Time To Market (TTM):** The operators are concerned about the time it takes to set up the network for a new service. Slicing of the network for different services/operator use cases provides a separation of concern that can result in a faster setup of a network slice for a certain service as it is separately managed and with limited impact on other network slices
- **Optimized use of resources:** Today the network is supporting many different services but with new use cases and more diverging requirements there is a need for optimizing the network for the specific type use case. Network slicing allows to match services to optimized network instances, and it also allows for a more optimized use of those specific resources
- **Allows for individual network statistics:** With service specific network slices and possibly even on the level of individual enterprises, there is a possibility of collecting network statistics specific for a limited and well defined group of users of the network slice. This is not the key driver for slicing but rather a benefit that may be a useful tool

Slicing can also be used to isolate different services in an operator's network. Future networks are expected to support new use cases going beyond the basic support for voice services and mobile broadband currently supported by existing cellular network, e.g. 2G/3G/4G. Some example use cases include:
- Evolution of MBB
   > Evolved communication services
   > Cloud services
   > Extended mobility and coverage
- Mission critical Machine Type Communication
   > Intelligent traffic systems
   > Smart grid
   > Industrial applications
- Massive Machine Type Communication
   > Sensors/actuators
   > Capillary networks
- Media
   > Efficient on-demand media delivery
   > Media awareness
   > Efficient support for broadcast services

These use cases are expected to have different performance requirements, e.g. bit-rates, latencies, as well as other network requirements, e.g. mobility, availability, security etc., affecting the network architecture and protocols.

Supporting these use cases could also mean that new players and business relations are needed compared to existing cellular networks. For instance it is expected that future networks should address the needs of
- Enterprise services
- Government services, e.g. national and/or public safety
- Verticals industries, e.g. automation, transportation
- Residential users

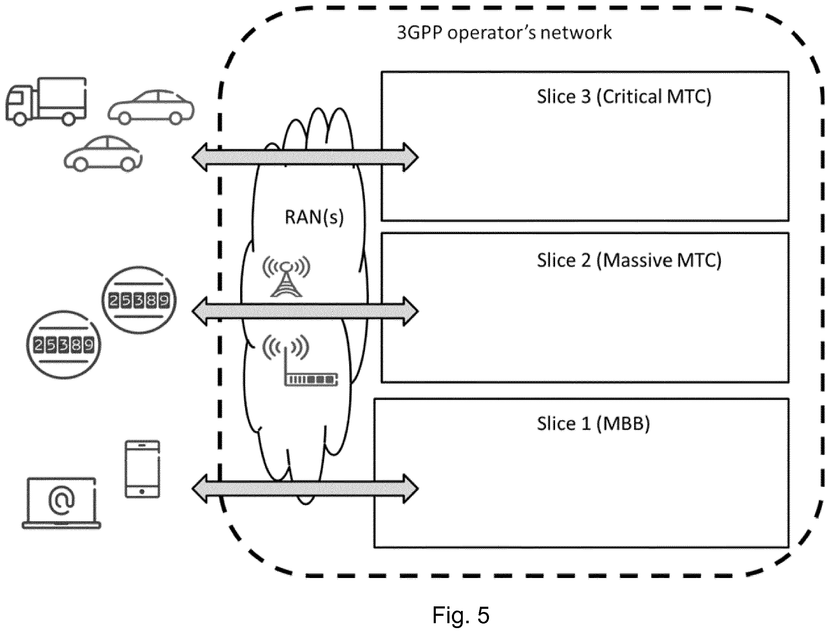

These different users and services are also expected to put new requirements on the network. Fig. 5 shows an example of a network slicing for a case when there exists different network slices in the core network for MBB, Massive MTC and Critical MTC. In other words, the network slices may comprise separate core network instances supporting the different network slices.

Network slicing introduces the possibility that the network slices are used for different services and use cases and there is a need to enable usage of this mechanism for wireless devices in the communication network to improve the performance of the communication network. Thus, Network slicing consists of defining, realizing and operating end-to-end logical networks by means of dedicated and/or shared resources in the Core Network and/or the Radio Access Network and associated management system(s). A problem is to enable a network slice capable wireless device to perform mobility procedures, e.g. cell reselection or cell selection, in the communication network to improve the performance of the communication network.

### SUMMARY

An object of embodiments herein is to provide a mechanism for improving performance of the communication network in an efficient manner.

According to an aspect the object is achieved by a method performed by a wireless device for handling mobility of the wireless device in a communication network as set out in claim 1. The communication network comprises partitioned sets of functionalities wherein each set of functionalities belongs to a network slice, and wherein a set of functionalities is separated from other sets of functionalities out of a total set of functionalities in the communication network. The wireless device receives, from a radio network node in the communication network, a message comprising information indicating at least one frequency band supported by the communication network, and which information further indicates one or more network slices supported by respective frequency band of the at least one frequency band. The wireless device further determines to initiate a mobility procedure regarding selection of a service area, to camp on, of a frequency band taking the information in the received message and also supporting information into account. The supporting information indicates one or more supporting network slices that support the wireless device.

According to another aspect the object is achieved by a method performed by a radio network node for handling mobility of a wireless device in a communication network as set out in claim 9. The communication network comprises partitioned sets of functionalities wherein each set of functionalities belongs to a network slice, and wherein a set of functionalities is separated from other sets of functionalities out of a total set of functionalities in the communication network. The radio network node transmits, to the wireless device, a message comprising information indicating at least one frequency band supported by the communication network, and which information further indicates one or more network slices supported by respective frequency band of the at least one frequency band.

According to yet another aspect the object is achieved by providing a wireless device for handling mobility of the wireless device in a communication network as set out in claim 14. The communication network comprises partitioned sets of functionalities wherein each set of functionalities belongs to a network slice, and wherein a set of functionalities is separated from other sets of functionalities out of a total set of functionalities in the communication network. The wireless device is configured to receive, from a radio network node in the communication network, a message comprising information indicating at least one frequency band supported by the communication network. The information further indicates one or more network slices supported by respective frequency band of the at least one frequency band. The wireless device is further configured to determine to initiate a mobility procedure regarding selection of a service area, to camp on, of a frequency band taking the information in the received message and also supporting information into account. The supporting information indicates one or more supporting network slices that support the wireless device.

According to still another aspect the object is achieved by providing a radio network node for handling mobility of a wireless device in a communication network as set out in claim 15. The communication network comprises partitioned sets of functionalities wherein each set of functionalities belongs to a network slice, and wherein a set of functionalities is separated from other sets of functionalities out of a total set of functionalities in the communication network. The radio network node is configured to transmit, to the wireless device, a message comprising information indicating at least one frequency band supported by the communication network, and which information further indicates one or more network slices supported by respective frequency band of the at least one frequency band.

Embodiments herein introduce an efficient manner of enabling sliced network structuring and usage by introducing additional signaling procedures for a mobility procedure. By sending the message indicating which network slice(s) a frequency band supports the wireless device may determine that a service area of a frequency band not supporting a network slice that is supporting the wireless device is not relevant to perform a mobility procedure on, e.g. activate measurements on. Thus, the wireless device doesn't have to measure on frequency bands that don't support the network slice(s) the wireless device is interested about, thereby reducing energy consumption of the wireless device and improving battery time for the wireless device. Embodiments herein thus enable the wireless device to determine where to camp on in an efficient manner leading to an improved performance of the wireless communication network.

### BRIEF DESCRIPTION OF THE DRAWINGS

Embodiments will now be described in more detail in relation to the enclosed drawings, in which:
- Fig. 1: is a schematic overview depicting a communication network according to prior art;
- Fig. 2: is a schematic overview depicting a radio access network in connection with a core network;
- Fig. 3: is a signalling scheme according to prior art;
- Fig. 4: is a signalling scheme according to prior art;
- Fig. 5: is a schematic overview depicting an example of a slicing of a core network according to prior art;
- Fig. 6: is a schematic overview depicting network slicing;
- Fig. 7: is a schematic overview depicting network sharing;
- Fig. 8: is a combined flowchart and signalling scheme depicting when a cell reselection at a wireless device according to prior art;
- Fig. 9: is a schematic overview depicting radio network nodes of different service areas with different network slice support;
- Fig. 10: is an overview depicting states of a wireless device;
- Fig. 11: is a schematic overview depicting a communication network according to embodiments herein;
- Fig. 12: is a combined flowchart and signalling scheme according to embodiments herein;
- Fig. 13: is a combined flowchart and signalling scheme according to embodiments herein;
- Fig. 14: is a schematic flowchart depicting a method performed by a wireless device according to embodiments herein;
- Fig. 15: is a schematic flowchart depicting a method performed by a radio network node according to embodiments herein;
- Fig. 16: is a combined flowchart and signalling scheme according to embodiments herein;
- Fig. 17: is a block diagram depicting a wireless device according to embodiments herein; and
- Fig. 18: is a block diagram depicting a radio network node according to embodiments herein.

### DETAILED DESCRIPTION

As part of developing embodiments herein a problem has first been identified. A management system may comprise a domain manager (DM), also referred to as the operation and support system (OSS) node managing the radio network nodes. A DM may further be managed by a network manager (NM). The radio network nodes may be interfaced by X2 and/or S1 interfaces, whereas an interface between two DMs is referred to as Itf-P2P. The management system may configure the radio network nodes, as well as receive observations associated with features in the radio network nodes. For example, DM observes and configures radio network nodes, while NM observes and configures DM, as well as the radio network nodes via DM. By means of configuration via the DM, NM and related interfaces, functions over the X2 and S1 interfaces can be carried out in a coordinated way throughout the RAN, eventually involving the Core Network, i.e. MME and S-GWs.

It is not yet specified by 3GPP if and how the LTE architecture should evolve to meet the challenges of the 5G time frame. It is assumed that there will be evolved counterparts of the S1, X2 and Uu interfaces and that any new RAT would be integrated with the LTE radio interface at RAN level in a similar fashion as the way LTE Dual Connectivity is defined. Embodiments herein will work for both an LTE-like architecture and a new architecture based on an evolution of the S1 interface.

Network slicing is about creating logically separated partitions of the network, addressing different business purposes. These "network slices" are logically separated to a degree that they can be regarded and managed as networks of their own.

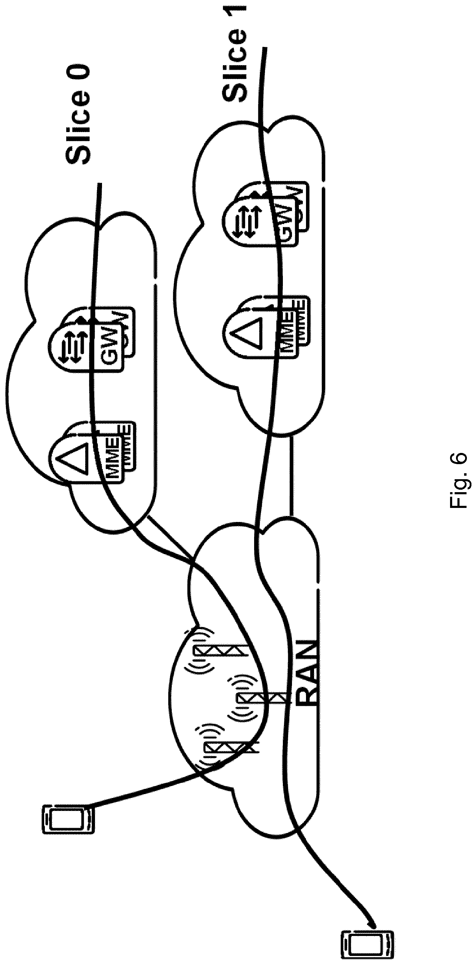

The network slicing applies to both LTE based networks and 5G Radio Access Technology (RAT) and to any other RATs as well. The network slicing supports business expansion, i.e. improving the cellular operator's ability to serve other industries, e.g., by offering connectivity services with different network characteristics, such as performance, security, robustness, and complexity. One shared Radio Access Network (RAN) infrastructure, comprising one or more RANs, connects to several Evolved Packet Core (EPC) instances, e.g. one EPC instance per network slice. As the EPC functions are being virtualized, it is assumed that the operator shall instantiate a new Core Network (CN) when a new slice should be supported. This architecture is shown in Fig. 6. Slice 0 can for example be a Mobile Broadband slice and Slice 1 can for example be a Machine Type Communication network slice.

Network sharing is described in 3GPP TR 22.951 version 13.0.0 and 3GPP TS 23.251 version 13.0.0. Network sharing is a way for operators to share the heavy deployment costs for mobile networks, especially in the roll-out phase. In the current mobile telephony marketplace, functionality that enables various forms of network sharing is becoming more and more important.

A network sharing architecture shall allow different core network operators to connect to a shared radio access network. The operators do not only share the radio network elements, but may also share the radio resources themselves. In addition to this shared radio access network the operators may or may not have additional dedicated radio access networks.

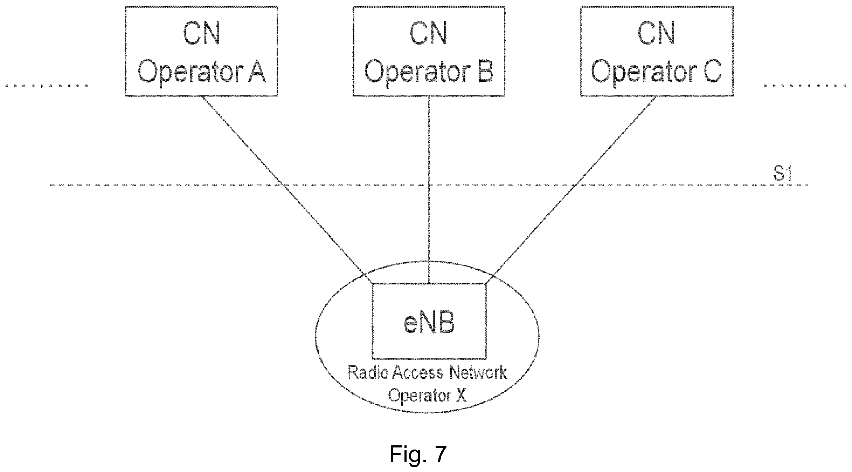

One of the reference architecture for network sharing is a Multi-Operator Core Network (MOCN) configuration, where only the radio access network is shared. This reference architecture is shown in Fig. 7, where Operator A of CN, Operator B of CN, and Operator C of CN share a RAN of Operator X.

In the MOCN configuration, the RAN routes the wireless device's initial access to the shared network to one of the available CN nodes. Supporting wireless devices shall inform the RAN of the chosen core network operator so that the RAN can route correctly.

Once the wireless device has been registered to a Public Land Mobile Network (PLMN) and enters RRC/ECM idle mode, Cell Reselection, PLMN selection, and other related procedures will occur. These procedures are described in detailed way in 3GPP TS 36.304 v.13.0.0 and 3GPP TS 23.122 v.13.0.0. In idle mode, the wireless device selects the cell to camp on mainly based on:
- Allowed PLMNs, based on current registered PLMN and any possible Equivalent PLMNs.
- Radio conditions of cells in different frequency layers

It should also be able to initiate NAS procedure, e.g. Tracking Area Update (TAU) if necessary.

The wireless device receives the following information from different entities which is useful in idle mode mobility functions.
▪ From an MME, in e.g. "NAS: Attach Accept" or "NAS: Tracking Area Update Accept" messages
   - List of Equivalent PLMNs, used for PLMN selection in case of loss of radio coverage of the registered PLMN.
   - Tracking Area Identifier List, for checking if a NAS TAU procedure is needed once the wireless device has performed a reselection to a new cell.
▪ From a radio network node of the RAN, in the system information, in the "RRCConnectionRelease" message, or by inheriting from another RAT at inter-RAT cell (re)selection:
   - Absolute priorities of different E-UTRAN frequencies or inter-RAT frequencies, for prioritization of frequency layers the wireless device shall camp on. These absolute priorities may be common to all wireless devices, in case of system information is used, or dedicated to a specific wireless device (in case of dedicated RRC signaling is used). If the wireless device receives dedicated priorities then these have priority over the common priorities available over system information.

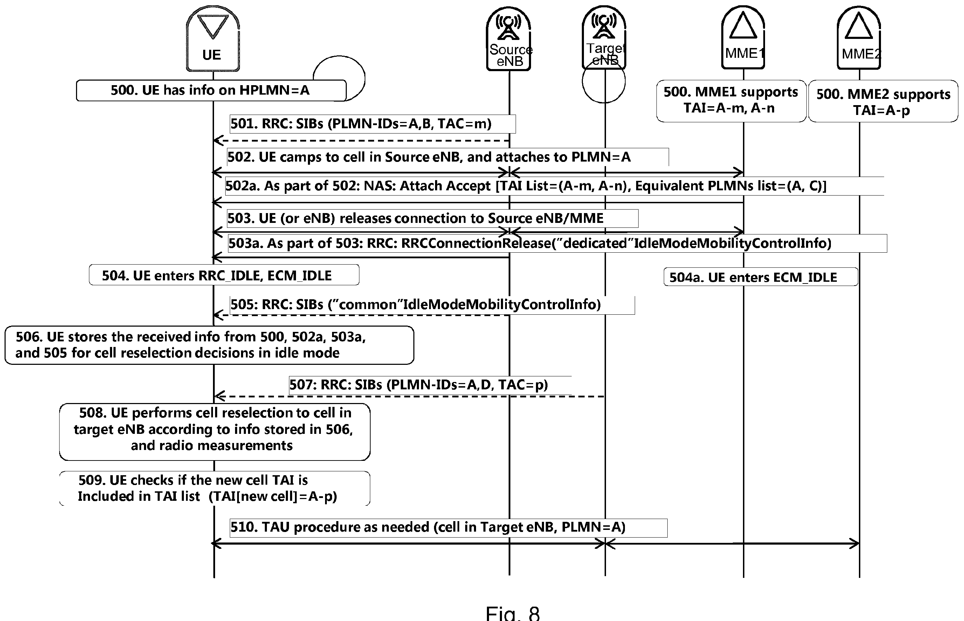

An example on how idle mode mobility functions are performed in a prior art network is shown in **Fig. 8****.**
**Action 500:** When the wireless device (UE) enters a network, e.g. when the wireless device is turned on, the wireless device has information about its home network (HPLMN). This information may for example be stored on a Subscriber Identity Module (SIM) and/or a Universal Subscriber Identity Module (USIM) that may also contain additional information about other networks, for example allowed visited networks (VPLMN). Further the core network nodes, such as the MME1 and the MME2, support different parts of the network which are identified using a Tracking Area Identifier (TAI), which comprises a network identity, such as a PLMN-ID, and a Tracking Area Code (TAC). This scenario is shown in action 500 in Fig. 8 where the wireless device has support for HPLMN=A, the MME1 has support for TAI=A-m and TAI=A-n, which indicates that MME1 supports the PLMN=A in the TACs m and n, and the MME2 has support for TAI=A-p, i.e. PLMN=A with tracking area code p.
**Action 501:** When the wireless device is switched on it will receive a broadcasted SIB from RAN nodes, such as the eNBs. The SIB comprises information on the networks supported by the eNB, indicated by the PLMN-ID, and the tracking area which the eNB is comprised in, indicated by the TAC and the PLMN-ID. In this case a first eNB supports the networks A and B as indicated by the PLMN-IDs of the first eNB and is located in the tracking area m as indicated by the TAC.
**Action 502:** Since the first cell supports the network A which is the home network of the wireless device, the wireless device will camp on this eNB, which when the wireless device is camping on may be referred to as a source eNB, a current eNB or a serving eNB. The wireless device will further attach to the network A via the MME1. In action 502a the MME1 sends an Attach Accept response comprising a list of the TAls supported by the MME1 and a list of equivalent PLMNs which indicates which networks are equivalent.
**Action 503:** When the wireless device is attached to a network but does not exchange any data with the network the UE or the eNB may release the connection between the wireless device and the eNB/MME. In action 503a the source eNB sends a RRCConnectionRelease message to the wireless device, which message may comprise IdleModeMobilityControlInfo dedicated for the wireless device.
**Action 504:** The wireless device enters RRC_IDLE mode and ECM_IDLE mode.
**Action 505:** When the wireless device is in IDLE_MODE it receives a broadcasted SIB comprising IdleModeMobilityControlInfo which is common for all wireless devices. The wireless device may use this broadcasted IdleModeMobilityControlInfo if it hasn't received any IdleModeMobilityControlInfo in action 503.
**Action 506:** The wireless device stores the information obtained from the actions 500, 502a, 503a and 505 for enabling cell reselection decisions in idle mode.
**Action 507:** The wireless device further receives broadcasted SIBs from eNBs such as the target eNB, which SIBs comprises networks supported by the eNBs, indicated by PLMN-IDs and the tracking area which the eNB is comprised in, which is indicated by the TAC. In this case, target eNB supports network A and D and is comprised in tracking area p.
**Action 508:** Since the target eNB supports network A, the wireless device may decide to perform a cell reselection to a cell in the target eNB based on the information stored in action 506 and radio measurements performed.
**Action 509:** The wireless device further checks if the TAI of the new cell in the target eNB is included in the TAI list received in action 502a.
**Action 510:** If the TAI of the new cell is not included in the TAI list received in action 502a, the wireless device performs a Tracking Area Update procedure via the cell in the target eNB and the PLMN-ID. In this case, since the TAI of the new cell is A-p, the wireless device will perform Tracking Area Update to the network to the MME2, which supports the TAI=A-p.

A problem that has been identified when developing embodiments herein in relation to, e.g. idle mode, mobility for a wireless device supporting network slicing, especially in cases there exist frequency layer limited network slices i.e. network slices which are supported only in parts of the RAN. In case of cell reselection in other frequency layers, the wireless device that is connected to a specific network slice needs to know in which cells, and on which frequency layers, in the network the network slice is supported; otherwise the wireless device can easily loose connection towards the current network slice if the wireless device selects a cell that has no support for the current network slice for the wireless device.

As the current IdleModeMobilityControlInfo' does not include slice information, in case of a multi-frequency RAN which supports multiple network slices, and a network slice may only be supported of some of the available frequency layers, unnecessary radio measurements, and unnecessary cell reselection attempts, may be initiated by the wireless device, although the wireless device will never be able to select the cell on the frequency band with support of the network slice.

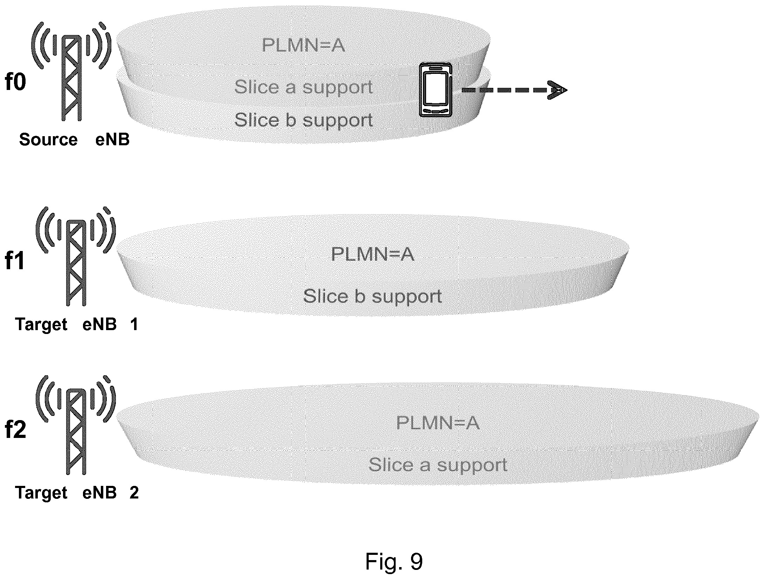

For example, in a radio network configuration according to Fig. 9, where the cells in source eNB is on frequency f0 and supporting PLMN=A; slice=a,b, cells in target eNB 1 is on frequency f1 and supporting PLMN=A; slice=b, and finally cells in target eNB 2 on frequency f2 and supporting PLMN=A; slice=a, and the wireless device is initially connected to ***slice** a* in frequency f0. The problem arises in action 508 of Fig. 8 as following. As the cells in target eNB 1, which is on frequency f1, does not support ***slice* a,** all the cells in f1 shall not be measured by the wireless device. However, as the IdleModeMobilityInformation in actions 503a and 505 does not distinguish between cells with different slice support, i.e. cells in target eNB 1 and target eNB 2, there is no way for the wireless device to prioritize the frequencies based on the network slice it is attached to, which will cause the wireless device to perform unnecessary measurements on frequency layers or in worse case, reselect a cell in the target eNB without knowing if ***slice a*** is supported.

In case of the wireless device reselects to a cell which does not support ***slice* a,** when the wireless device wants to request connection to ***slice a*** via any of the cells in the target eNB, it will be rejected as the cell in Target eNB doesn't have any network connection towards a MME that supports ***slice a.*** This kind of principle is not good for many reasons. It may result in the wireless device attempting to access multiple cells and then being rejected. This may lead to unnecessary signaling in the network and may also mean that the wireless device is out-of-service for traffic both top and from the wireless device. Another problem is that the wireless device may be camping on a cell without knowing that it will not get any service for a specific network slice. This may happen if the wireless device doesn't trigger a normal tracking area update when entering the cell to camp on. Embodiments herein provide "slice support information", also referred to as just information, for different RAN frequencies as a frequency selection criteria for the network slice supported wireless device. This results in that a wireless device supporting network slicing will be able to camp to a 'correct' cell, which 'correct' cell supports the network slice the wireless device is attached to.

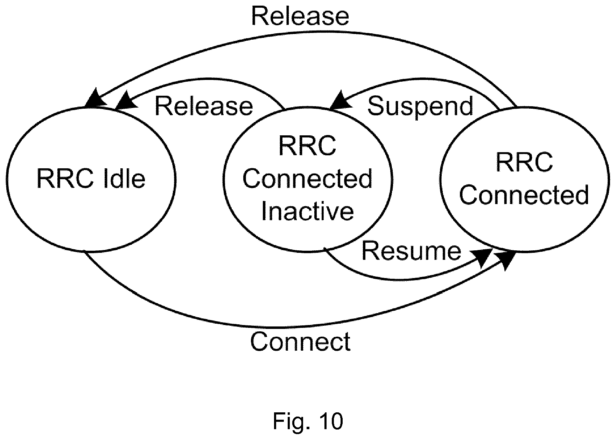

The wireless device 10 is herein exemplified being in idle mode but it should also be noted that a novel state model may be proposed for the 5G architecture enabling an efficient wireless device sleeping, a fast and lightweight transition from sleeping to active states and joint access optimizations. One likely model to be adopted is the following shown in a **Fig. 10****.** The model consists of three states: "RRC Idle", "RRC Connected" and "RRC Connected Inactive". In the novel model the state transitions from RRC Idle to RRC Connected are expected to occur mainly during the first initial access, e.g. when the wireless device attaches to the network, or as a fallback case, e.g. when the wireless devices and/or network cannot use the previously stored RAN context. As a consequence, this transition is not expected to occur as often as in LTE. On the other hand, transitions from "RRC Connected Inactive" to "RRC Connected" are expected to occur quite often and should be optimized as a lightweight and fast transition. The novel "RRC Connected Inactive" state designed to be used as the primary sleep state for the 5G access has as one of the characteristics the maintenance of context information by the wireless device and the network when the wireless device moves from "RRC Connected" to "RRC Connected Inactive" also called a Suspended state.

Therefore, when it comes to the wireless device state model assumptions relevant for embodiments herein one can say that the described cell selection and cell reselection enhancements, i.e. the mobility procedure, may also occur for 5G wireless devices in RRC Idle as currently in LTE. The mobility procedure enhancements may also apply for wireless devices in the RRC Connected Inactive state, often also called a Dormant state, and also for wireless devices in the Suspended state.

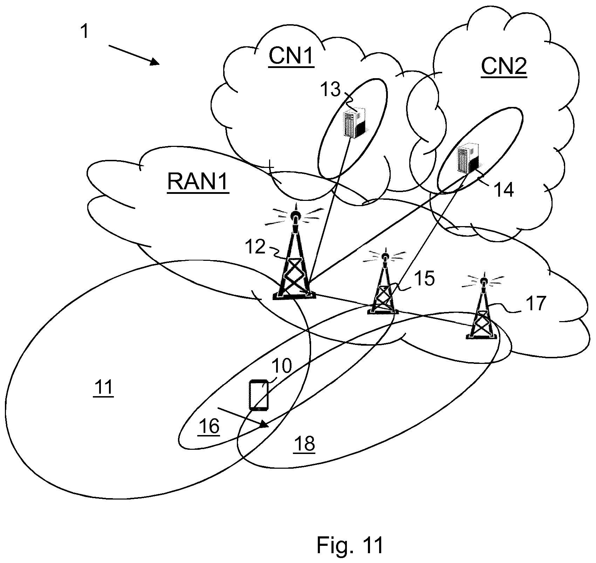

Embodiments herein relate to communication networks in general. **Fig. 11** is a schematic overview depicting **a communication network 1.** The communication network 1 comprises one or more RANs e.g. a first RAN (RAN1), connected to a plurality of CNs, exemplified as a first CN (CN1), and a second CN (CN2), all packet switched core networks. The communication network 1 may use a number of different technologies, such as Wi-Fi, Long Term Evolution (LTE), LTE-Advanced, 5G, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are applicable also in further development of the existing communication systems such as e.g. 3G and LTE.

In the communication network 1, wireless devices e.g. **a wireless device 10** such as a mobile station, a non-access point (non-AP) STA, a STA, a user equipment and/or a wireless terminal, are connected via the one or more RANs, to the CNs. It should be understood by those skilled in the art that "wireless device" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or any device communicating within a cell or service area.

The communication network 1 comprises **a first radio network node 12** providing radio coverage over a geographical area, **a first service area 11,** of a first radio access technology (RAT), such as LTE, UMTS, Wi-Fi or similar. The first radio network node 12 may be a radio access network node such as radio network controller or an access point such as a wireless local area network (WLAN) access point or an Access Point Station (AP STA), an access controller, a base station, e.g. a radio base station such as a NodeB, an evolved Node B (eNB, eNodeB), a base transceiver station, Access Point Base Station, base station router, a transmission arrangement of a radio base station, a stand-alone access point or any other network unit capable of serving a wireless device within the service area served by the first radio network node 12 depending e.g. on the first radio access technology and terminology used. The communication network is virtually network sliced into a number of network slices, each network slice supports one or more type of wireless devices and/or one or more type of services i.e. each network slice supports a different set of functionalities. Network slicing introduces the possibility that the network slices are used for different services and use cases and these services and use cases may introduce differences in the functionality supported in the different network slices. Each network slice may comprise one or more network nodes or elements of network nodes providing the services/functionalities for the respective network slice. Each network slice may comprise a network node such as a RAN node and/or a core network node e.g. Radio Software Defined Networking (SDN) nodes, MMEs, S-GWs, Serving GPRS Support Nodes (SGSN), or corresponding nodes in e.g. a 5G network or similar. The GPRS meaning General Packet Radio Services. For example, a first network slice for e.g. MBB devices may comprise a first core network node 13 of the CN1. A second network slice for e.g. a certain enterprise may comprise a second core network node 14 of the CN2. Each network slice supports a set of functionalities out of a total set of functionalities in the communication network. E.g. the first network slice node 13 supports a first set of functionalities out of the total set of functionalities in the communication network 1. The first set of functionalities is separated from a different set of functionalities out of the total set of functionalities in the communication network 1. E.g. the first set of functionalities being associated with MBB devices is separated or logically separated, e.g. using separated data storage or processing resources, from a second set of functionalities of the second network slice.

The first set of functionalities may use one or more resources in a core or RAN network of the communication network, which one or more resources are separated from other resources used by a different set of functionalities, i.e. different network slices, out of the total set of functionalities in the communication network 1. The resources may then be dedicated or virtually dedicated for each set of functionalities or network slice. Thus, the core network node may be separated from other core network nodes supporting a second set of functionalities out of the total set of functionalities in the communication network. Separated meaning herein physically separated wherein the core network nodes may be executed on different hardware platforms and therefore using different resources of the hardware, and/or logically separated wherein the core network nodes may be executed on a same hardware platform and use different resources such as memory parts or resources of processor capacity but may also use some same resources of the hardware e.g. a single physical core network node may be partitioned into multiple virtual core network nodes.

Hence, the first core network node 13 supports the first set of functionalities out of the total set of functionalities in the first core network of the communication network, which first set of functionalities belongs to the first network slice, and is separated from another set of functionalities out of the total set of functionalities in the first network. The second set of functionalities out of a total set of functionalities in the communication network may be different or similar as ones supported by the first network slice.

The wireless device 10 in this example supported by both the first and second network slice but may merely be supported by one network slice e.g. the first network slice.

Furthermore, the communication network 1 comprises a **second radio network node 15** providing radio coverage over a geographical area, a second cell or a **second service area** 16, of a second radio access technology (RAT), such as LTE, UMTS, Wi-Fi or similar. The second radio network node 15 has its own radio resource management (RRM) for the second service area 16. The second radio network node 15 may be a radio access network node such as radio network controller or an access point such as a WLAN access point or an Access Point Station (AP STA), an access controller, a base station, e.g. a radio base station such as a NodeB, an evolved Node B (eNB, eNodeB), a base transceiver station, Access Point Base Station, base station router, a transmission arrangement of a radio base station, a stand-alone access point or any other network unit capable of serving a wireless device within the service area served by the second radio network node 15 depending e.g. on the second radio access technology and terminology used. The second radio network node 15 is comprised in the same or different RAN as the first radio network node 12 and the first and second RAT may be the same or different RATs. The second radio network node 15 supports the second network slice.

Furthermore, the communication network 1 comprises a **third radio network node 17** providing radio coverage over a geographical area, a third cell or a **third service area** 18, of a third radio access technology (RAT), such as LTE, UMTS, Wi-Fi or similar. The third radio network node 17 may have its own radio resource management (RRM) for the third service area 18. The third radio network node 17 may be a radio access network node such as radio network controller or an access point such as a WLAN access point or an Access Point Station (AP STA), an access controller, a base station, e.g. a radio base station such as a NodeB, an evolved Node B (eNB, eNodeB), a base transceiver station, Access Point Base Station, base station router, a transmission arrangement of a radio base station, a stand-alone access point or any other network unit capable of serving a wireless device within the service area served by the third radio network node 17 depending e.g. on the third radio access technology and terminology used. The third radio network node 17 is comprised in the same or different RAN as the first radio network node 12 and the first, second and third RAT may be the same or different RATs. The third radio network node 17 does not support the first nor the second network slice. The first service area 11 is of the first RAT of a first frequency band, e.g. E-UTRA and 2620 - 2640 MHz, the second service area 16 is of the second RAT of a second frequency band e.g. E-UTRA and 2660 - 2680 MHz, the third service area is of the third RAT of a third frequency band e.g. WiFi and 2500 - 2520 MHz. It should be noted that a service area may the denoted as 'cell', beam, beam group or similar to define an area of radio coverage. The first, second and third frequency bands may be the same, different or partly different than one another.

The first radio network node 12 is connected to the second radio network node 15 and/or the third radio network node 17, over e.g. an X2 connection/s, S1 connection/s or a combination thereof or similar, and bearer traffic addressed to and from the wireless device 10 may be delivered by the first/second and third radio network nodes.

According to embodiments herein the wireless device 10 moves into the second service area 16 and the third service area 18 when being in the first service area 11. A radio network node, e.g. the first radio network node 12, transmits a message to the wireless device 10 informing the wireless device of the network slices the frequency bands supports. The first radio network node 12 may transmit the message in a dedicated transmission during a release of a RRC connection between the wireless device 10 and the first radio network node 12, e.g. when the wireless device 10 enters idle_mode or similar. The message may alternatively or additionally be broadcasted from e.g. the second radio network node 15, informing the wireless device 10 which network slice(s) the second frequency band supports. The message may comprise a list defining that the second frequency band supports the second network slice and that the third frequency band supports no network slice. The wireless device 10 may then determine to initiate a mobility procedure, e.g. activate measurements for cell selection or cell reselection, on the second service area as the frequency band supports the second network slice, which is a network slice supporting the wireless device 10, also called herein as a supporting network slice. However, the wireless device may determine not the initiate a mobility procedure on the third service area as the third frequency band does not support any of the network slices supporting the wireless device 10. Hence, embodiments herein provide "slice support information" for different frequencies as a frequency selection criteria for the slice supported leading to an efficient selection of service area to camp on.

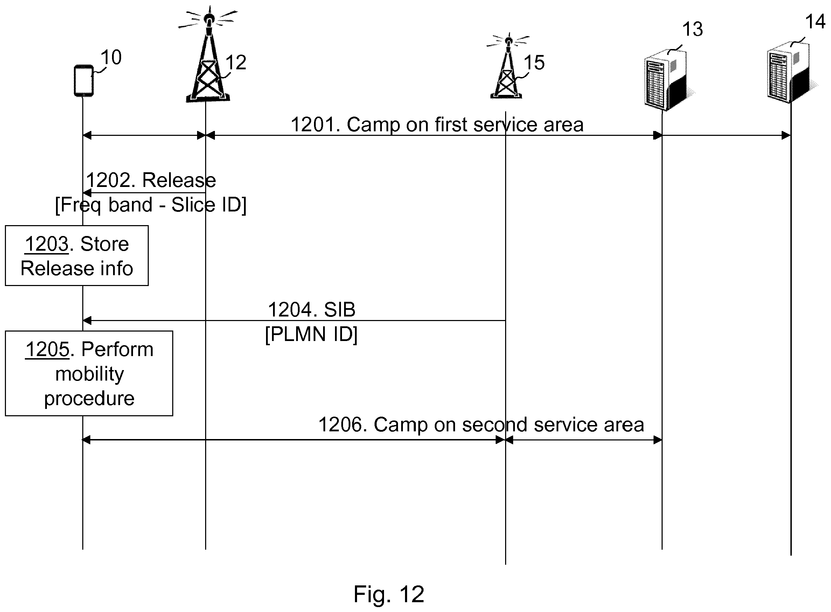

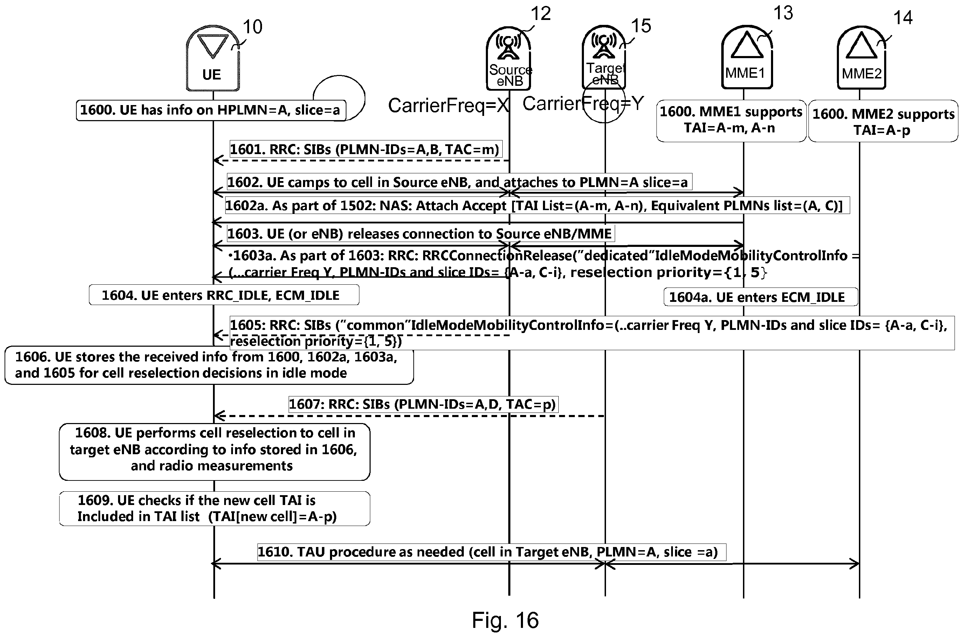

**Fig. 12** is a combined flowchart and signalling scheme according to some embodiments herein.
**Action 1201.** The wireless device 10 attaches and camps to the first service area 11 of the first radio network node 12. The wireless device 10 is thus attached to a PLMN of the first service area and the first and second network slices.
**Action 1202.** The wireless device 10 enters into idle_mode, releasing the RRC connection to the first radio network node 12. It should here be noted that embodiments herein also are applicable when the wireless device enters into a dormant state or a suspended state explained below with reference to Fig 16. During the release of the connection between the wireless device 10 and the first radio network node 12, the first radio network node 12 may transmit the message to the wireless device 10 in a dedicated transmission. The message indicates or defines which network slice(s) a frequency band supports. For example, the message from the first radio network node 12 may comprise information indicating that the second frequency band supports the second network slice.
**Action 1203.** The wireless device 10 may then store this information of the received message for selection of service area in an inactive state, e.g. idle_mode, suspended_mode or dormant mode.
**Action 1204.** The second radio network node 15 broadcasts its system information of a network such as indicating a PLMN ID of the second service area 16, and the wireless device 10 detects the system information of the second radio network node being within range of the second radio network node 15 on the second frequency band. If the wireless device 10 received in action 1202 that the frequency band supported by the second radio network node 15 doesn't support a network slice the wireless device 10 is interested in so then the wireless device 10 may not bother about that frequency at all and would not receive the system information. E.g. if the wireless device 10 did receive the "dedicated" information in action 1202 then it may not need to detect the system information, but in the case the wireless device 10 did not receive any "dedicated" information in action 1202, then it could search for other frequency bands as described.
**Action 1205.** The wireless device 10 determines whether to initiate measurements, i.e. initiate mobility procedure, on the second service area 16 based on whether the stored information indicates that the second frequency band of the second service area 16 supports at least one of the network slice supporting the wireless device 10. As the second service area 16 in this example supports the second network slice being a network slice that supports the wireless device 10 the wireless device activates measurements on the second service area 16.
**Action 1206.** The wireless device 10 may then, when signalling strength and/or quality of the second service area 16 is above a threshold, select or reselect the second service area 16 to camp on.

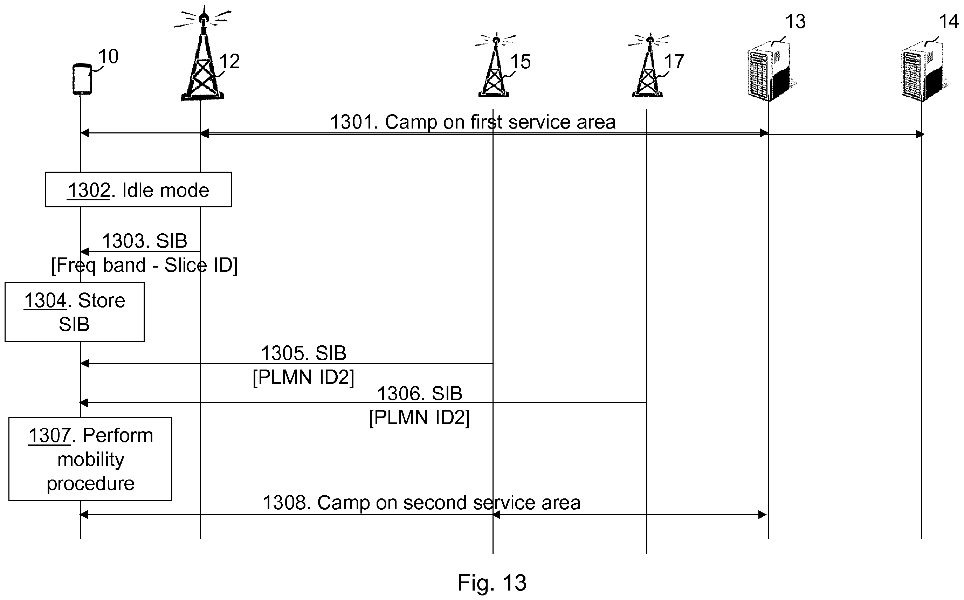

**Fig. 13** is a combined flowchart and signalling scheme according to some embodiments herein. In this illustrated embodiment, the third service area 18 also supports the second network slice and the second service area 16 supports the second network slice. Furthermore, the message comprising the slice support information is broadcast from the first radio network node 12, however, this message may also be broadcast from a target base station such as the second radio network node 15 or any other radio network node.
**Action 1301.** The wireless device 10 attaches and camps to the first service area 11 of the first radio network node 12. The wireless device 10 thus attached to the PLMN of the first service area and the second network slice.
**Action 1302.** The wireless device 10 enters into Idle_mode, releasing the RRC connection to the first radio network node 12. It should here be noted that embodiments herein also are applicable when the wireless device enters into dormant state or suspended state explained below with reference to Fig 16.
**Action 1303.** In this illustrated embodiment the first radio network node 12 may broadcast the message comprising information, e.g. in a system information block of the system information of the first service area 11, indicating frequency bands supported by the communication network 1, e.g. the first frequency band of the first service area 11, the second frequency band of the second service area 16, and the third frequency band of the third service area 18. The information indicates one or more network slices supported by respective frequency band of the frequency bands, e.g. that the first frequency band supports the second network slice, and that the second frequency band supports the second network slice and that the third frequency band supports the second network slice. Furthermore, a priority order may be indicated in the message. For example, the priority order may be a band priority order indicating a preferred frequency band over other frequency bands. Additionally or alternatively the priority order may be a slice priority order prioritizing frequency band supporting a certain network slice over other frequency bands supporting the same network slice. For example, the message may indicate band priority where the third frequency band is prioritised over the second frequency band but may further indicate a slice priority of the second network slice for the second frequency band that is higher than a slice priority of second network slice for the third frequency band. It should be noted that this common information for all wireless devices
**Action 1304.** The wireless device 10 may store this information of the received message for selection of service area in an inactive state.
**Action 1305.** The second radio network node 15 broadcasts its system information of a network such as indicating a PLMN ID of the second service area 16, and the wireless device 10 detects the system information of the second radio network node being within range of the second radio network node 15.
**Action 1306.** The third radio network node 17 broadcasts its system information of a network such as indicating a PLMN ID of the third service area 18, and the wireless device 10 detects the system information of the third radio network node 17 being within range of the third radio network node 17.
**Action 1307.** As the second service area 16 in this example supports the second network slice being a network slice that supports the wireless device 10 and that the slice priority of the second network slice for the second frequency band is higher than the slice priority of second network slice for the third frequency band, the wireless device 10 activates measurements, i.e. initiates the mobility procedure, on the second service area 16. It should be noted that actions 1305 and 1306 may be optional i.e. that the wireless device 10 may perform the mobility procedure of selection of cell to camp on based on information received in action 1303. It should also be noted that in case the wireless device 10 has received the information in dedicated transmissions that may overrun the common information broadcasted.
**Action 1308.** The wireless device 10 may then when signalling strength and/or quality of the second service area 16 is above a threshold then select or reselects the second service area 16 to camp on. Thus, the wireless device 10 supporting network slicing will to be able camp to a 'correct' cell, e.g. in a cell selection process or cell reselection process, which 'correct' cell supports the network slice the wireless device 10 is attached to.

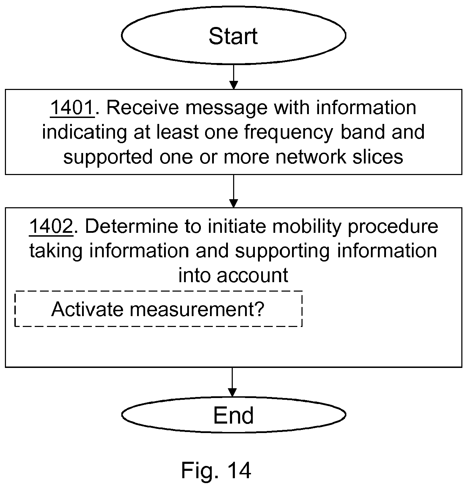

The method actions performed by the wireless device 10 for handling mobility of the wireless device 10 in the communication network 1 according to some embodiments will now be described with reference to a flowchart depicted in **Fig. 14****.** Actions performed in some embodiments are marked with dashed boxes. The communication network 1 comprises partitioned sets of functionalities wherein each set of functionalities belongs to a network slice, e.g. the first and the second network slice, and wherein a set of functionalities is separated from other sets of functionalities out of a total set of functionalities in the communication network 1.
**Action 1401.** The wireless device 10 receives, from a radio network node in the communication network, e.g. the first radio network node 12, the message comprising information indicating at least one frequency band supported by the communication network 1. The information further indicates one or more network slices supported by respective frequency band of the at least one frequency band. For example, the message may define a number of frequency bands and supported network slices of respective frequency band. The frequency band may be indicated as real value frequencies or as radio access technologies defined by frequency bands. The communication network may comprise a set of radio network nodes and any radio network node may provide the message within a service area of the respective radio network node in the set of radio network nodes. For example, the radio network node transmitting the message may be the first radio network node 12 providing radio coverage over the first service area 11 or the second radio network node 15 providing radio coverage over the second service area 16. The message may be received in a dedicated transmission from the radio network node, e.g. from the firsts radio network node 12, during a release of the connection between the wireless device 10 and the radio network node. The message may alternatively or additionally be received in a broadcast transmission from the radio network node, e.g. the message may be broadcast by a neighboring radio network node. The message may be broadcast by any of the radio network node in the set of radio network nodes in the communication network.
   The information may indicate one or more network identities supporting each frequency band of the at least one frequency band, and each network identity defines one or more network slice supported by the network identity. The information may alternatively indicate the one or more network slices in a list of the respective frequency band of the at least one frequency band.
**Action 1402.** The wireless device 10 determines to initiate a mobility procedure regarding selection of a service area, e.g. the second service area 16, to camp on, of a frequency band taking the information in the received message and also supporting information into account. The supporting information indicates one or more supporting network slices that support the wireless device 10, e.g. the first network slice. The mobility procedure may comprise activating one or more measurements on the frequency band of the service area, such as the second service area 16, and the selection to camp on the service area of the frequency is based on the one or more measurements. The wireless device 10 may determine to initiate the mobility procedure when the at least one frequency band comprises the frequency band of the service area and the information indicates that the frequency band of the service area supports at least one network slice, e.g. the first network slice, of the one or more supporting network slices in the supporting information. The embodiments herein apply on a wireless device supporting a single network slice but also apply to the case when a wireless device is connected to multiple network slices.

The information may indicate a band priority order of the at least one frequency band for selecting to camp on, e.g. the information in the message may indicate that the first frequency band has a higher priority value to be selected to camp on than the second network slice. The band priority order may be taken into account when determining to initiate the mobility procedure of regarding selection of the service area of the frequency band to camp on.

The information may further indicate a slice priority order of each network slice of the one or more network slices of the at least one frequency band for selecting to camp on. The slice priority order may be taken into account when determining to initiate the mobility procedure. E.g. the slice priority order is higher for the second network slice in the second frequency band than the second network slice in the third frequency band then the wireless device 10 may prioritize the second frequency band, i.e. the second service area 16, over the third frequency band, i.e. the third service area 18, to initiate the mobility procedure on.

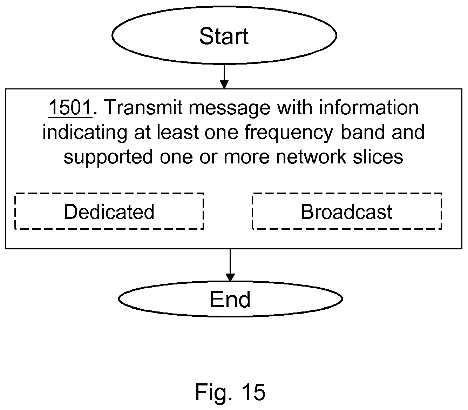

The method actions performed by the radio network node, e.g. first radio network node 12, for handling mobility of the wireless device 10 in the communication network 1 according to some embodiments will now be described with reference to a flowchart depicted in Fig. 15. Actions performed in some embodiments are marked with dashed boxes. The communication network 1 comprises partitioned sets of functionalities wherein each set of functionalities belongs to a network slice, e.g. the first and the second network slice, and wherein a set of functionalities is separated from other sets of functionalities out of a total set of functionalities in the communication network 1.

**Action 1501.** The radio network node transmits, to the wireless device 10, the message comprising information indicating at least one frequency band supported by the communication network 1. The information further indicates one or more network slices supported by respective frequency band of the at least one frequency band. The information may also indicate one or more network identities supporting each frequency band of the at least one frequency band, and each network identity defines one or more network slice supported by the network identity.

The information may indicate the one or more network slices in a list of the respective frequency band of the at least one frequency band. The information may also indicate the band priority order of the at least one frequency band for selecting to camp on. The radio network node can provide absolute priorities of different E-UTRAN frequencies or inter-RAT frequencies, for prioritization of frequency layers the UE shall camp on. These absolute priorities may be common to all wireless devices, in case of system information is used, or dedicated to a specific wireless device, in case of dedicated RRC signaling is used. If the wireless device receives dedicated priorities then these have priority over the common priorities available over system information.

The common priorities for cell reselection may be provided to the wireless device 10 in a *"SystemlnformationBlockType3"* and *"SystemlnformationBlockType5"* messages. The dedicated priorities for cell reselection may be provided to the wireless device 10 in the *"RRCConnection Release"* message as part of the *IdleModeMobilityControllnfo* information element. The network logic for selecting which information to include in the *IdleModeMobilityControllnfo* information element for a specific wireless device may be based on Subscriber Profile Identity (SPID), also known as RAT/Frequency Selection Priority (RFSP) index. Therefore the SPID stored in a Home Subscriber Server (HSS) is called as Subscribed RFSP Index. MME receives the SPID from the HSS during an attach procedure of the wireless device 10 and the SPID is also stored in MME. At context setup the MME forwards the SPID to the radio network node and the radio network node prioritizes the RATs and carriers based on SPID. For roaming subscribers MME can remove or add SPID based on International Mobile Subscriber Identity (IMSI) analysis.

The SPID value maps, in the radio network node, to a specific set of RAT/carrier, i.e. to be used as *IdleModeMobilityControllnfo* information element towards the wireless device, are configurable as it may be operator strategy dependent. See example below in which number 7 indicates highest priority and (No) is "forbidden". For example, SPID value of 2 would indicate that the wireless device 10 is not allowed to access LTE, and that WCDMA has higher priority than GSM.

| SPID | LTE C1 | LTE C2 | WCDMA | GSM | Subscription |
|---|---|---|---|---|---|
| Default | 7 | 6 | 5 | 4 | Normal |
| 1 | No | No | 6 | 7 | Telephony only |
| 2 | No | No | 7 | 6 | No LTE |

As specified in 3GPP 23.401 v.13.0.0 the RFSP index is used as part of the Radio Resource Management (RRM). RRM functions are concerned with the allocation and maintenance of radio communication paths, and are performed by the radio access network. The RRM strategy in E-UTRAN may be based on user specific information.

To support RRM in E-UTRAN the MME provides the parameter *"Subscriber Profile ID for RAT*/*Frequency priority"'* (SPID) to the radio network node across an S1 association. The SPID is mapped by the radio network node to locally defined configuration in order to apply specific RRM strategies. The SPID is wireless device specific and applies to all the Radio Bearers. Examples of how this parameter may be used by the E-UTRAN:
- to derive wireless device specific cell reselection priorities to control idle mode camping.
- to decide on redirecting active mode wireless devices to different frequency layers or RATs.

The dedicated idle mode "mobility control information" is located in *RRCConnectionRelease* message.

The information may further indicate the slice priority order, called Slice support reselection priority, of each network slice of the one or more network slices of the at least one frequency band for selecting to camp on. The information may be preconfigured or configured from a managing system or similar.

The message may be transmitted in the dedicated transmission to the wireless device 10 during the release of the connection between the wireless device 10 and the radio network node. Alternatively or additionally, the message may be transmitted in a broadcast transmission.

The information is also called herein as "Slice support information" for E-UTRAN and/or Inter-RAT frequencies and may be added in (as well as the "Slice support reselection priority" in some embodiments):
- *RRCConnectionRelease* in the *IdleModeMobilityControllnfo* information element.
- *SystemlnformationBlockType3* in the *cellReselectionServingFreqlnfo* information element
- *SystemlnformationBlockType5* in the *InterFreqCarrierFreqlnfo* information element.

This "Slice support information" and in some embodiments also the "Slice support reselection priority" may be explicit in terms of "PLMN-IdentityList".

One example of this addition is shown as bold and underlined in the following using ASN.1 coding as an example when the explicit "slice support information" is added for E-UTRAN frequencies. The given numbers in the example are just examples of possible values, for example that up to 6x10 different "slice support information" may be indicated for each E-UTRAN frequency and that the maximum number of a numerical slice identity is 256 and that a user-friendly slice name can contain up to 40 characters.

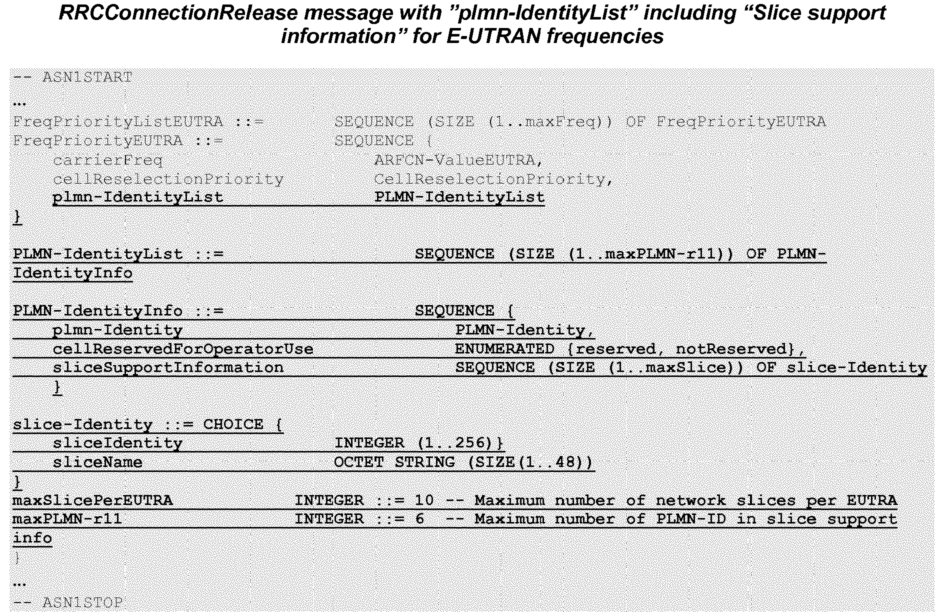

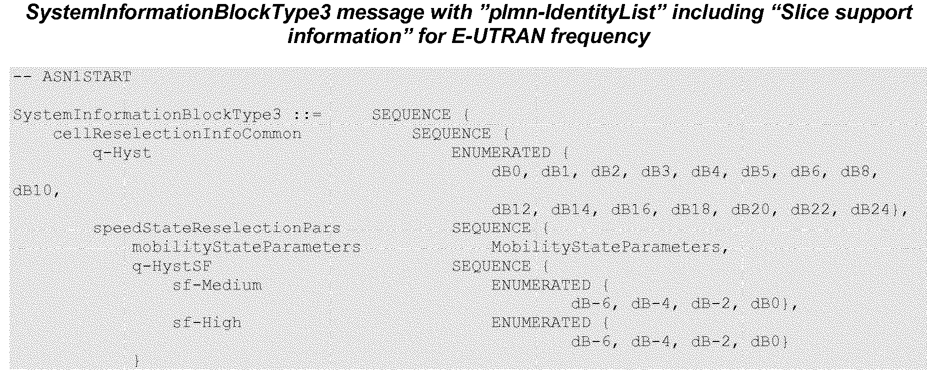

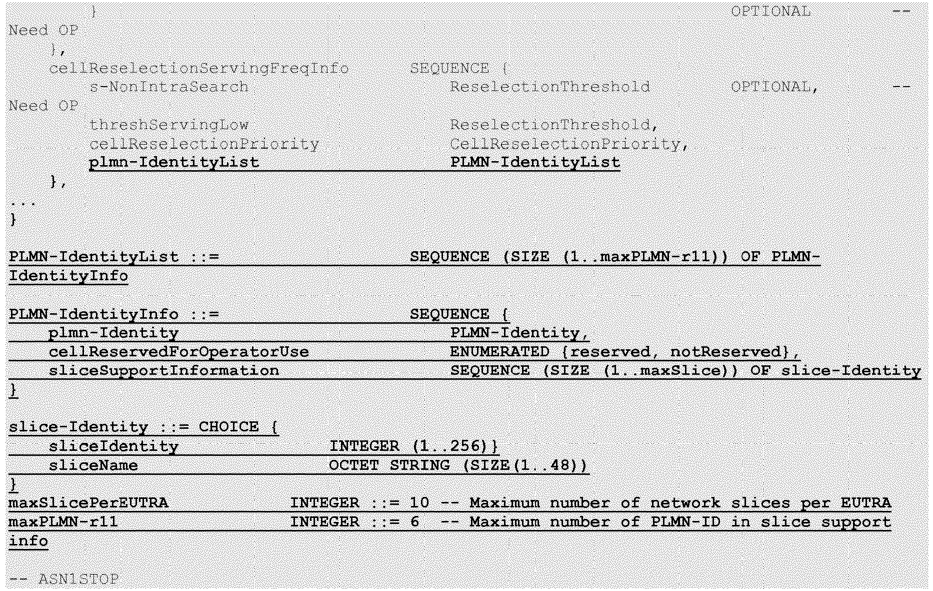

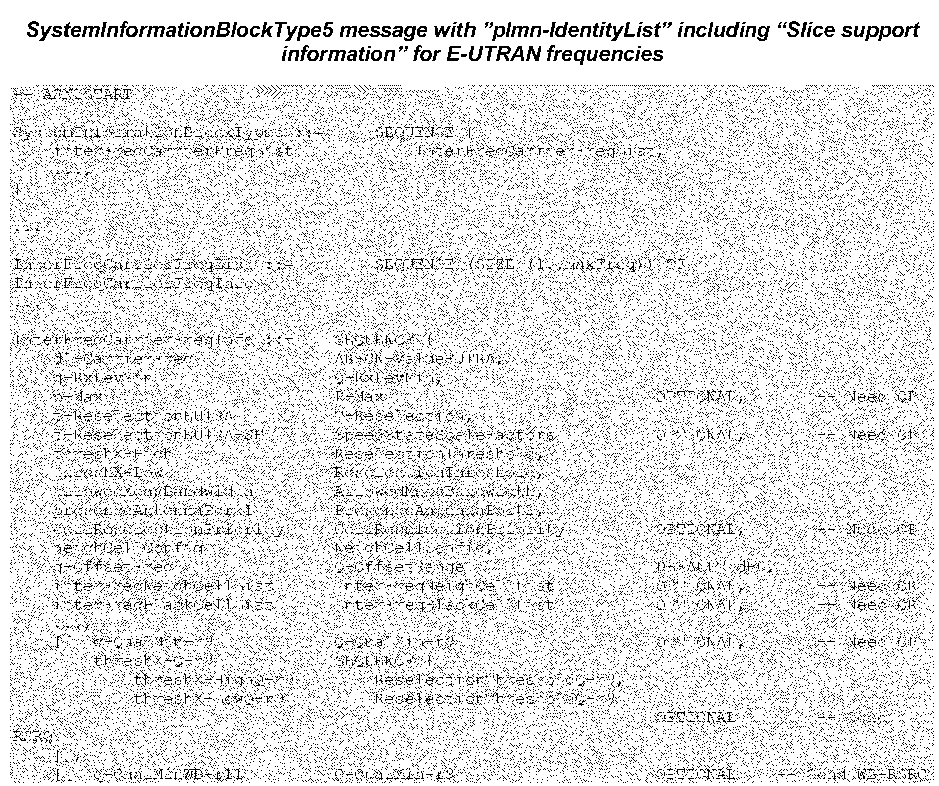

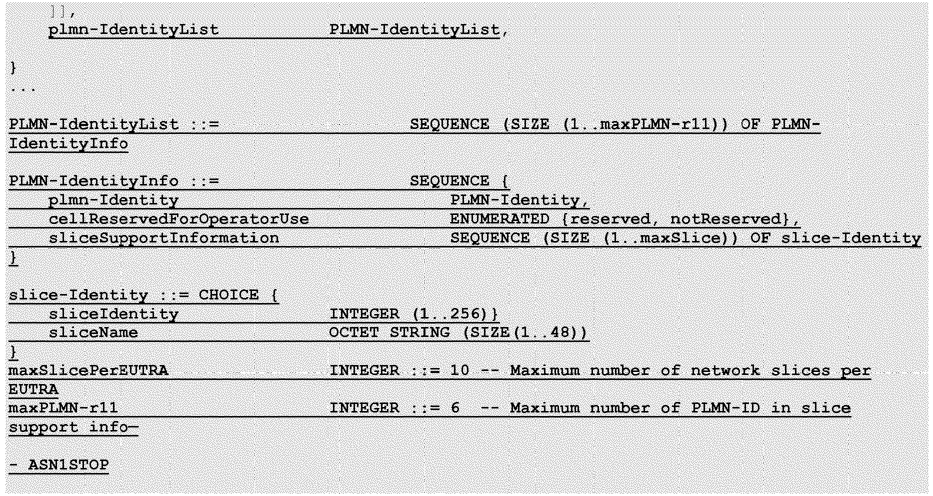

One example of an addition is shown as bold and underlined in the following using ASN.1 coding as an example when the explicit "slicesupportinformation" and also the "sliceSupportReselectionPriority" is added for E-UTRAN frequencies.

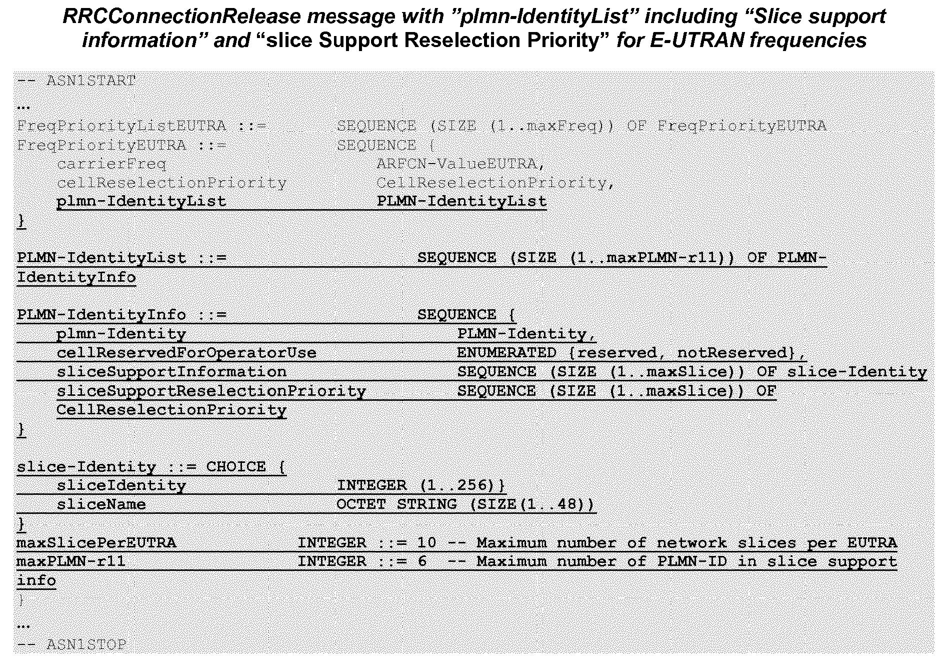

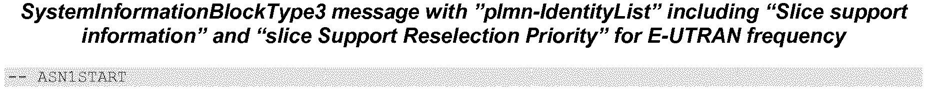

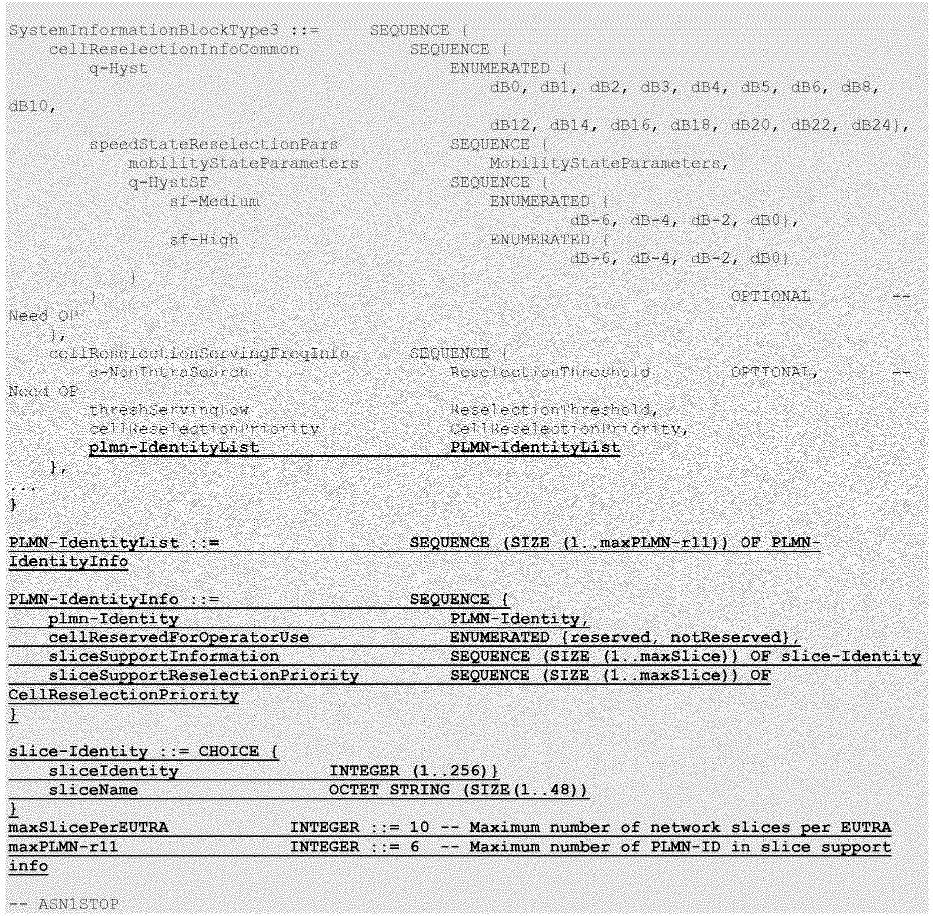

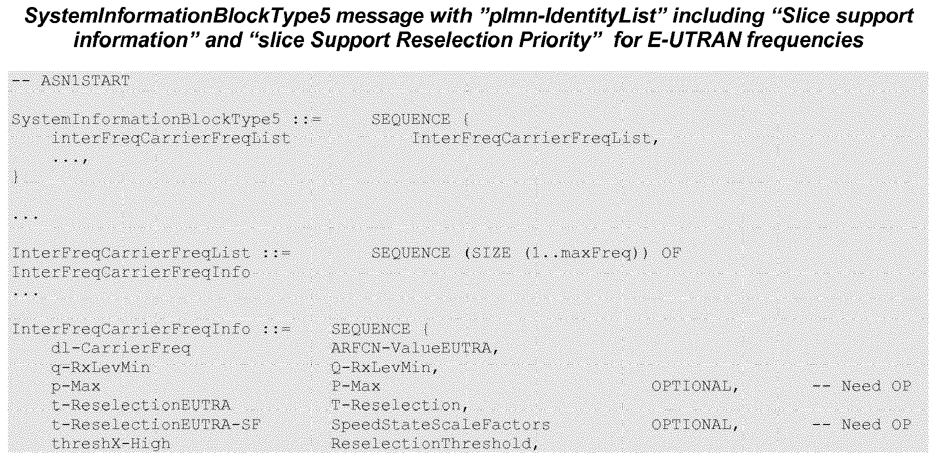

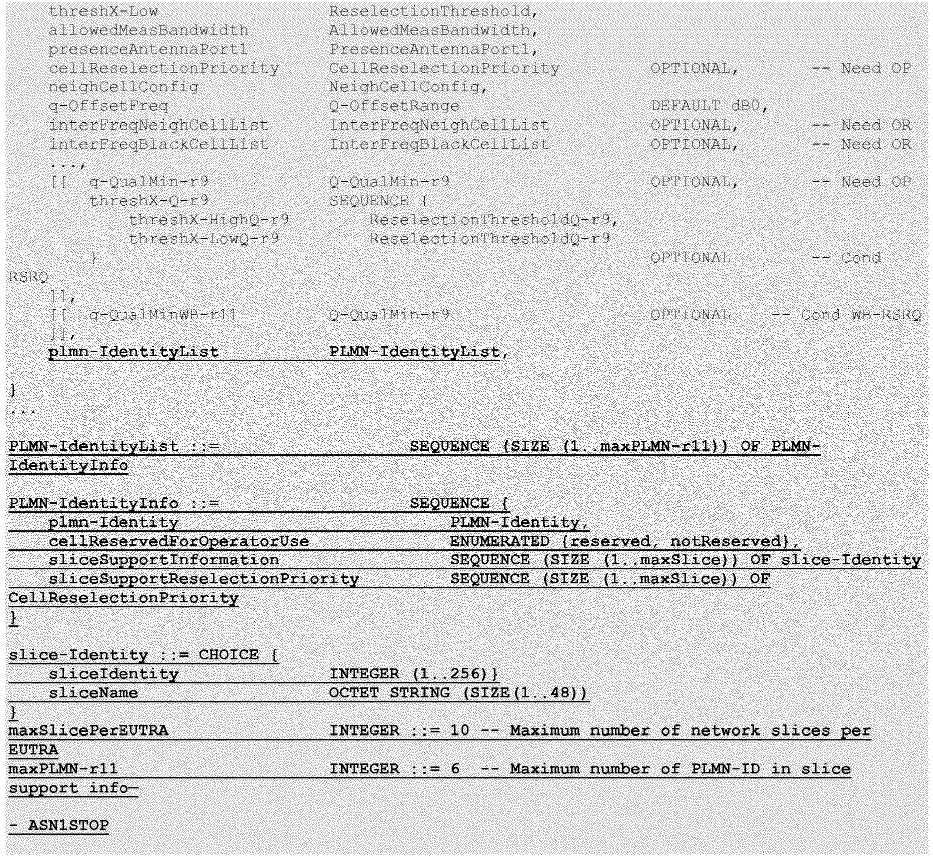

For the dedicated idle mode "mobility control information", the additional "Slice support information" and in some embodiments the "Slice support reselection priority" may not be mandatory since the radio network node may implicitly add slice support information in the existing cellRelselectionPriority information element. E.g. if the slice is not supported in a certain frequency band, the cellReselectionPriority IE can be set to a very low value.

The signal flow when explicit "slice supported information" and "Slice support reselection priority" is introduced is shown in **Fig. 16****.**
**Action 1600:** When the wireless device 10 (UE) enters a network, e.g. when the wireless device 10 is turned on, the wireless device 10 has information about its home network (HPLMN) and supports first network slice a. This information may for example be stored on a Subscriber Identity Module (SIM) and/or a Universal Subscriber Identity Module (USIM) that may also contain additional information about other networks, for example allowed visited networks (VPLMN). Further the core network nodes 13 and 14, such as the MME1 and the MME2, support different parts of the network which are identified using a Tracking Area Identifier (TAI), which comprises a network identity, such as a PLMN-ID, and a Tracking Area Code (TAC). This scenario is shown in action 1600 in Fig. 16 where the wireless device 10 has support for HPLMN=A and network slice =a, the MME1 has support for TAI=A-m and TAI=A-n, which indicates that MME1 supports the PLMN=A in the TACs m and n, and the MME2 has support for TAI=A-p, i.e. PLMN=A with tracking area code p.
**Action 1601:** When the wireless device 10 is switched on it will receive a broadcasted SIB from RAN nodes, such as the eNBs. The SIB comprises information on the networks supported by the eNB, indicated by the PLMN-ID, and the tracking area which the eNB is comprised in, indicated by the TAC and the PLMN-ID. In this case a first eNB supports the networks A and B as indicated by the PLMN-IDs of the first eNB and is located in the tracking area m as indicated by the TAC.
**Action 1602:** Since the first cell supports the network A which is the home network of the wireless device, the wireless device will camp on this eNB, which when the wireless device is camping on may be referred to as a source eNB, a current eNB or a serving eNB. The UE will further attach to the network A via the MME1. In action 1602a the MME1 sends an Attach Accept response comprising a list of the TAIs supported by the MME1 and a list of equivalent PLMNs which indicates which networks are equivalent.
**Action 1603:** When the wireless device 10 is attached to a network but does not exchange any data with the network the wireless device 10 or the eNB may release the connection between the wireless device 10 and the eNB/MME. In action 1603a the source eNB sends a RRCConnectionRelease message to the wireless device, which message may comprise IdleModeMobilityControlInfo dedicated for the wireless device. According to embodiments herein the IdleModeMobilityControlInfo may comprise the information indicating the at least one frequency band supported by the communication network 1, and which information further indicates one or more network slices supported by respective frequency band of the at least one frequency band. For example, the information may comprise carrier Freq Y and its related PLMN-IDs and slice IDs= {A-a, C-i} with reselection priority={1, 5}.
**Action 1604:** The wireless device 10 enters RRC_IDLE mode and ECM_IDLE mode.
**Action 1605:** When the wireless device 10 is in IDLE_MODE it may receive a broadcasted SIB comprising IdleModeMobilityControlInfo which is common for all wireless devices. For example, the information may comprise carrier Freq Y and its relates PLMN-IDs and slice IDs= {A-a, C-i} with reselection priority={1, 5}.. The wireless device 10 may use this broadcasted IdleModeMobilityControlInfo if it hasn't received any IdleModeMobilityControlInfo in action 1603.
**Action 1606:** The wireless device 10 stores the information obtained from the actions 1600, 1602a, 1603a and 1605 for enabling cell reselection or selection decisions in idle mode or inactive mode.
**Action 1607:** The wireless device 10 further receives broadcasted SIBs from eNBs such as the target eNB, which SIBs comprises networks supported by the eNBs, indicated by PLMN-IDs and the tracking area which the eNB is comprised in, which is indicated by the TAC. In this case, target eNB supports network A and C and is comprised in tracking area p.
**Action 1608:** Since the target eNB supports network A, the wireless device 10 may decide to perform a cell reselection/selection to a cell in the target eNB based on the information stored in action 1606 and radio measurements performed.
**Action 1609:** The wireless device 10 further checks if the TAI of the new cell in the target eNB is included in the TAI list received in action 1602a.
**Action 1610:** If the TAI of the new cell is not included in the TAI list received in action 1602a, the wireless device performs a Tracking Area Update procedure via the cell in the target eNB and the PLMN-ID and slice a. In this case, since the TAI of the new cell is A-p, the wireless device 10 will perform Tracking Area Update to the network to the MME2, which supports the TAI=A-p.

In action 1606, as the wireless device 10 has retrieved information on which slices are supported in different frequency layers from action 1603a and/or action 1605, the wireless device 10 can then easily only perform measurements on those frequencies which the slice is supported. Also, the problem mentioned earlier in action 508 in Fig. 8, where a wireless device doesn't know if the target cell supports the slice or not, is solved as the wireless device 10 now know that the network slice is supported on cells in frequency Y as it has retrieved the slice support information already in action 1603a and/or action 1605.

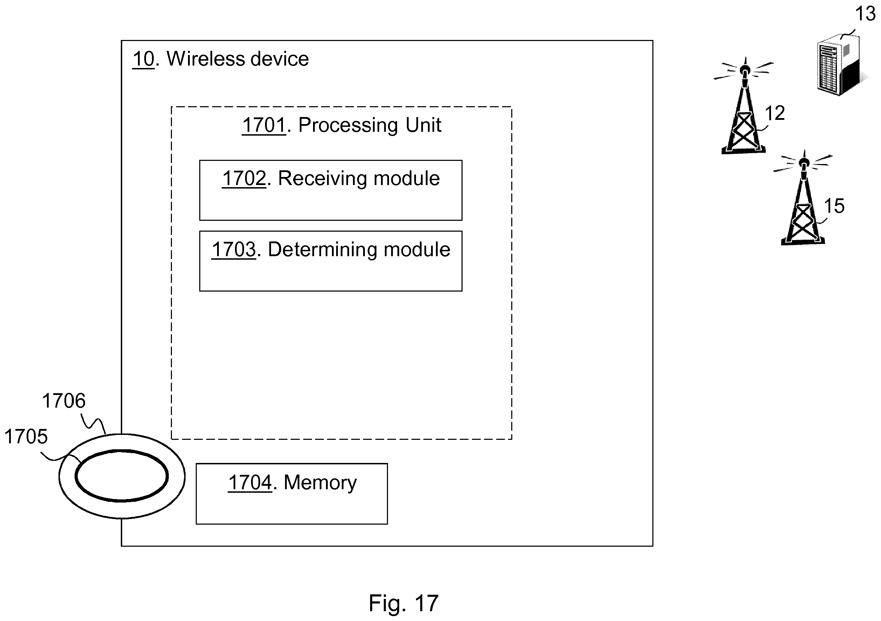

**Fig. 17** is a block diagram depicting the wireless device 10 according to embodiments herein for handling mobility of the wireless device 10 in the communication network 1. The communication network 1 comprises partitioned sets of functionalities wherein each set of functionalities belongs to a network slice, and wherein a set of functionalities is separated from other sets of functionalities out of a total set of functionalities in the communication network 1.

The wireless device 10 may comprise a **processing unit 1701,** one or more processors, configured to perform the methods herein.

The wireless device 10 may comprise a **receiving module 1702,** e.g. a receiver or transceiver. The wireless device 10, the processing unit 1701, and/or the receiving module 1702 may be configured to receive, from the radio network node, e.g. the first radio network node 12, in the communication network 1, the message comprising information indicating at least one frequency band supported by the communication network 1. The information further indicates one or more network slices supported by respective frequency band of the at least one frequency band. The information may indicate one or more network identities supporting each frequency band of the at least one frequency band, and each network identity defines one or more network slice supported by the network identity. The information may indicate the one or more network slices in the list of the respective frequency band of the at least one frequency band. The wireless device 10, the processing unit 1701, and/or the receiving module 1702 may be configured to receive the message in the dedicated transmission from the radio network node during the release of the connection between the wireless device 10 and the radio network node. The wireless device 10, the processing unit 1701, and/or the receiving module 1702 may be configured to receive the message in the broadcast transmission from the radio network node.

The wireless device 10 may comprise a **determining module 1703.** The wireless device 10, the processing unit 1701, and/or the determining module 1703 may be configured to determine to initiate the mobility procedure regarding selection of the service area, to camp on, of a frequency band taking the information in the received message and also supporting information into account. The supporting information indicates one or more supporting network slices that support the wireless device 10. The information may further indicate the band priority order of the at least one frequency band for selecting to camp on, and the wireless device 10, the processing unit 1701, and/or the determining module 1703 may be configured to take the band priority order into account when determining to initiate the mobility procedure of regarding selection of the service area of the frequency band to camp on. The wireless device 10, the processing unit 1701, and/or the determining module 1703 may be configured to determine to initiate the mobility procedure when the at least one frequency band comprises the frequency band of the service area and the information indicates that the frequency band of the service area supports at least one network slice of the one or more supporting network slices in the supporting information. The wireless device 10, the processing unit 1701, and/or the determining module 1703 may be configured to activate one or more measurements on the frequency band of the service area, as part of the mobile procedure, and the selection to camp on the service area of the frequency is based on the one or more measurements. The information may further indicate the slice priority order of each network slice of the one or more network slices of the at least one frequency band for selecting to camp on, and the wireless device 10, the processing unit 1701, and/or the determining module 1703 may be configured to take the slice priority order into account when determining to initiate the mobility procedure.

The wireless device 10 comprises **a memory 1704.** The memory comprises one or more units to be used to store data on, such as sets of functionalities, indications, list of frequency bands, mapping between network slices and frequency bands, identities, signaling measurements, applications to perform the methods disclosed herein when being executed, and/or similar.

The methods according to the embodiments described herein for the wireless device 10 are respectively implemented by means of e.g. **a computer program 1705** or a computer program product, comprising instructions, i.e., software code portions, which, when executed on at least one processor, cause the at least one processor to carry out the actions described herein, as performed by the wireless device 10. The computer program 1705 may be stored on **a computer-readable storage medium 1706,** e.g. a disc or similar. The computer-readable storage medium 1706, having stored thereon the computer program, may comprise the instructions which, when executed on at least one processor, cause the at least one processor to carry out the actions described herein, as performed by the wireless device 10. In some embodiments, the computer-readable storage medium may be a non-transitory computer-readable storage medium.

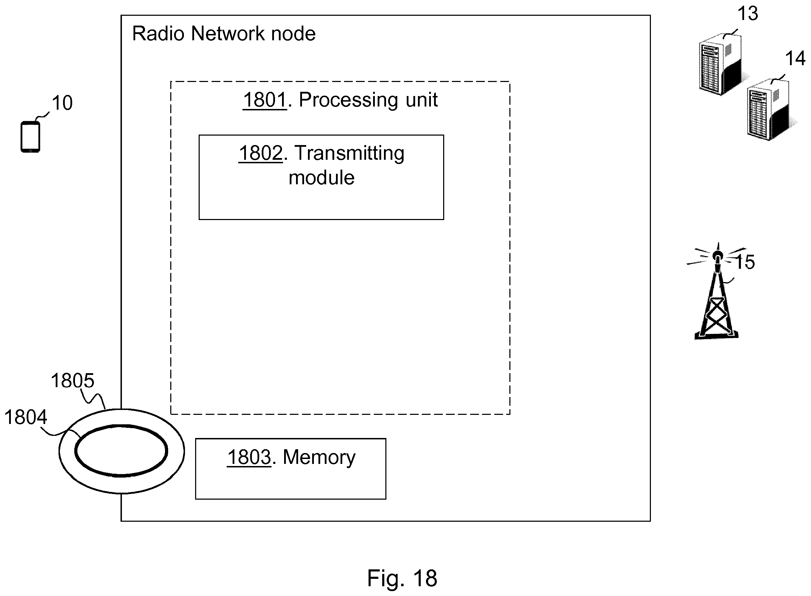

**Fig. 18** is a block diagram depicting a radio network node, such as the first radio network node 12, according to embodiments herein for handling mobility of the wireless device 10 in the communication network 1. The communication network 1 comprises partitioned sets of functionalities wherein each set of functionalities belongs to a network slice, and wherein a set of functionalities is separated from other sets of functionalities out of a total set of functionalities in the communication network 1.

The radio network node may comprise **a processing unit 1801,** one or more processors, configured to perform the methods herein.

The radio network node may comprise **a transmitting module 1802,** e.g. a transmitter or a transceiver. The radio network node, the processing unit 1801, and/or the transmitting module 1802 may be configured to transmit, to the wireless device 10, the message comprising information indicating at least one frequency band supported by the communication network 1. The information further indicates one or more network slices supported by respective frequency band of the at least one frequency band. The information may further indicate the band priority order of the at least one frequency band for selecting to camp on. The information may indicate one or more network identities supporting each frequency band of the at least one frequency band, and each network identity defines one or more network slice supported by the network identity. The information may indicate the one or more network slices in the list of the respective frequency band of the at least one frequency band. The radio network node, the processing unit 1801, and/or the transmitting module 1802 may be configured to transmit the message in the dedicated transmission to the wireless device 10 during the release of the connection between the wireless device 10 and the radio network node. The radio network node, the processing unit 1801, and/or the transmitting module 1802 may be configured to transmit the message in a broadcast transmission. The information may indicate the slice priority order of each network slice of the one or more network slices of the at least one frequency band for selecting to camp on.

The radio network node further comprises **a memory 1803.** The memory comprises one or more units to be used to store data on, such as sets of functionalities, indications, list of active connections, identities of network slices, context, identities, signaling measurements, applications to perform the methods disclosed herein when being executed, and/or similar.

The methods according to the embodiments described herein for the radio network node are respectively implemented by means of e.g. **a computer program 1804** or a computer program product, comprising instructions, i.e., software code portions, which, when executed on at least one processor, cause the at least one processor to carry out the actions described herein, as performed by the radio network node. The computer program 1804 may be stored on a **computer-readable storage medium 1805,** e.g. a disc or similar. The computer-readable storage medium 1805, having stored thereon the computer program, may comprise the instructions which, when executed on at least one processor, cause the at least one processor to carry out the actions described herein, as performed by the radio network node. In some embodiments, the computer-readable storage medium may be a non-transitory computer-readable storage medium.

Embodiments herein relate to a network with network slices i.e. core network with partitioned sets of functionalities where the first core network node 13 supports the first set of functionalities and the second core network node 14 supports the second set of functionalities out of the total set of functionalities in the core networks of the communication network. The first set of functionalities belongs to the first network slice of the core network and the second set belongs to the second network slice, and are separated from another set of functionalities out of the total set of functionalities in the core networks.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a radio network node or wireless device, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of radio network nodes and wireless devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims .

## Claims

1. A method performed by a wireless device (10) for handling mobility of the wireless device (10) in a communication network (1), which communication network (1) comprises partitioned sets of functionalities wherein each set of functionalities belongs to a network slice, and wherein a set of functionalities is separated from other sets of functionalities out of a total set of functionalities in the communication network (1), the method comprising:
- *receiving* (1401), from a radio network node (12) in the communication network, a message comprising information indicating at least one frequency band supported by the communication network (1), and which information further indicates one or more network slices supported by respective frequency bands of the at least one frequency band; and
- *determining* (1402) to initiate a mobility procedure regarding selection of a service area (16) and frequency band to camp on, taking the information in the received message and also supporting information into account, which supporting information indicates one or more supporting network slices that support the wireless device (10).

2. A method according to claim 1, wherein the information further indicates a band priority order of the at least one frequency band for selecting to camp on and the band priority order is taken into account when determining to initiate the mobility procedure of regarding selection of the service area of the frequency band to camp on.

3. A method according to any of the claims 1-2, wherein the *determining* (1402) comprises determining to initiate the mobility procedure when the at least one frequency band comprises the frequency band of the service area and the information indicates that the frequency band of the service area supports at least one network slice of the one or more supporting network slices in the supporting information.

4. A method according to any of the claims 1-3, wherein the information indicates one or more network identities supporting each frequency band of the at least one frequency band, and each network identity defines one or more network slice supported by the network identity.

5. A method according to any of the claims 1-3, wherein the information indicates the one or more network slices in a list of the respective frequency band of the at least one frequency band.

6. A method according to any of the claims 1-5, wherein the mobility procedure comprises activating one or more measurements on the frequency band of the service area (16) and the selection to camp on the service area of the frequency is based on the one or more measurements.

7. A method according to any of the claims 1-6, wherein the message is received in a dedicated transmission from the radio network node (12) during a release of a connection between the wireless device (10) and the radio network node (12).

8. A method according to any of the claims 1-7, wherein the information further indicates a slice priority order of each network slice of the one or more network slices of the at least one frequency band for selecting to camp on and the slice priority order is taken into account when determining to initiate the mobility procedure.

9. A method performed by a radio network node (12) for handling mobility of a wireless device (10) in a communication network (1), which communication network (1) comprises partitioned sets of functionalities wherein each set of functionalities belongs to a network slice, and wherein a set of functionalities is separated from other sets of functionalities out of a total set of functionalities in the communication network (1), the method comprising:
- *transmitting* (1501), to the wireless device (10), a message comprising information indicating at least one frequency band supported by the communication network (1), and which information further indicates one or more network slices supported by respective frequency bands of the at least one frequency band.

10. A method according to claim 9, wherein the information further indicates a band priority order of the at least one frequency band for selecting to camp on.

11. A method according to any of the claims 9-10, wherein the information indicates one or more network identities supporting each frequency band of the at least one frequency band, and each network identity defines one or more network slice supported by the network identity.

12. A method according to any of the claims 9-11, wherein the information indicates the one or more network slices in a list of the respective frequency band of the at least one frequency band.

13. A method according to any of the claims 9-12, wherein the message is transmitted in a dedicated transmission to the wireless device (10) during a release of a connection between the wireless device (10) and the radio network node (12).

14. A wireless device (10) for handling mobility of the wireless device (10) in a communication network (1), which communication network (1) comprises partitioned sets of functionalities wherein each set of functionalities belongs to a network slice, and wherein a set of functionalities is separated from other sets of functionalities out of a total set of functionalities in the communication network (1), the wireless device (10) being configured to:
receive, from a radio network node (12) in the communication network, a message comprising information indicating at least one frequency band supported by the communication network (1), and which information further indicates one or more network slices supported by respective frequency bands of the at least one frequency band; and to
determine to initiate a mobility procedure regarding selection of a service area (16) and frequency band to camp on, taking the information in the received message and also supporting information into account, which supporting information indicates one or more supporting network slices that support the wireless device (10).

15. A radio network node (12) for handling mobility of a wireless device (10) in a communication network (1), which communication network (1) comprises partitioned sets of functionalities wherein each set of functionalities belongs to a network slice, and wherein a set of functionalities is separated from other sets of functionalities out of a total set of functionalities in the communication network (1), the radio network node is configured to:
transmit, to the wireless device (10), a message comprising information indicating at least one frequency band supported by the communication network (1), and which information further indicates one or more network slices supported by respective frequency bands of the at least one frequency band.

## Patentansprüche

1. Verfahren, das von einer drahtlosen Vorrichtung (10) durchgeführt wird, zur Handhabung der Mobilität der drahtlosen Vorrichtung (10) in einem Kommunikationsnetzwerk (1), wobei das Kommunikationsnetzwerk (1) aufgeteilte Funktionalitätssätze umfasst, wobei jeder Funktionalitätssatz zu einem Netzwerksegment gehört und wobei ein Funktionalitätssatz von anderen Funktionalitätssätzen eines Gesamtfunktionalitätssatzes in dem Kommunikationsnetzwerk (1) getrennt ist, wobei das Verfahren Folgendes umfasst:
- *Empfangen* (1401) einer Nachricht von einem Funknetzwerkknoten (12) in dem Kommunikationsnetzwerk, die Informationen umfasst, die mindestens ein Frequenzband angeben, das von dem Kommunikationsnetzwerk (1) unterstützt wird, und wobei die Informationen ferner ein oder mehrere Netzwerksegmente angeben, die von den jeweiligen Frequenzbändern des mindestens einen Frequenzbands unterstützt werden; und
- *Bestimmen* (1402), dass ein Mobilitätsvorgang bezüglich der Auswahl eines Dienstbereiches (16) und eines Frequenzbands, das genutzt werden soll, eingeleitet werden soll, wobei die Informationen in der empfangenen Nachricht und zudem zusätzliche Informationen berücksichtigt werden, wobei die zusätzlichen Informationen ein oder mehrere zusätzliche Netzwerksegmente angeben, welche die drahtlose Vorrichtung (10) unterstützen.

2. Verfahren nach Anspruch 1, wobei die Informationen ferner eine Bandprioritätsreihenfolge des mindestens einen Frequenzbands für die Nutzungsauswahl angeben, wobei die Bandprioritätsreihenfolge berücksichtigt wird, wenn bestimmt wird, dass der Mobilitätsvorgang bezüglich der Auswahl des Dienstbereiches und des Frequenzbands, das genutzt werden soll, eingeleitet werden soll.

3. Verfahren nach einem der Ansprüche 1-2, wobei das *Bestimmen* (1402) ein Bestimmen, dass der Mobilitätsvorgang eingeleitet werden soll, wenn das mindestens eine Frequenzband das Frequenzband des Dienstbereiches umfasst und die Informationen angeben, dass das Frequenzband des Dienstbereiches mindestens ein Netzwerksegment des einen oder der mehreren zusätzlichen Netzwerksegmente in den zusätzlichen Informationen unterstützt, umfasst.

4. Verfahren nach einem der Ansprüche 1-3, wobei die Informationen eine oder mehrere Netzwerkidentitäten angeben, die jedes Frequenzband des mindestens einen Frequenzbands unterstützen, und wobei jede Netzwerkidentität ein oder mehrere Netzwerksegmente definiert, die von der Netzwerkidentität unterstützt werden.

5. Verfahren nach einem der Ansprüche 1-3, wobei die Informationen das eine oder die mehreren Netzwerksegmente in einer Liste des jeweiligen Frequenzbands des mindestens einen Frequenzbands angeben.

6. Verfahren nach einem der Ansprüche 1-5, wobei der Mobilitätsvorgang ein Aktivieren einer oder mehrerer Messungen an dem Frequenzband des Dienstbereiches (16) umfasst und die Nutzungsauswahl des Dienstbereiches der Frequenz auf der einen oder den mehreren Messungen beruht.

7. Verfahren nach einem der Ansprüche 1-6, wobei die Nachricht in einer dedizierten Übertragung von dem Funknetzwerkknoten (12) während einer Freigabe einer Verbindung zwischen der drahtlosen Vorrichtung (10) und dem Funknetzwerknoten (12) empfangen wird.

8. Verfahren nach einem der Ansprüche 1-7, wobei die Informationen ferner eine Segmentprioritätsreihenfolge aller Netzwerksegmente des einen oder der mehreren Netzwerksegmente des mindestens einen Frequenzbands für die Nutzungsauswahl angeben und die Segmentprioritätsreihenfolge berücksichtigt wird, wenn bestimmt wird, dass der Mobilitätsvorgang eingeleitet werden soll.

9. Verfahren, das von einem Funknetzwerknoten (12) durchgeführt wird, zur Handhabung der Mobilität einer drahtlosen Vorrichtung (10) in einem Kommunikationsnetzwerk (1), wobei das Kommunikationsnetzwerk (1) aufgeteilte Funktionalitätssätze umfasst, wobei jeder Funktionalitätssatz zu einem Netzwerksegment gehört und wobei ein Funktionalitätssatz von anderen Funktionalitätssätzen eines Gesamtfunktionalitätssatzes in dem Kommunikationsnetzwerk (1) getrennt ist, wobei das Verfahren Folgendes umfasst:
- *Übertragen* (1501) einer Nachricht an die drahtlose Vorrichtung (10), die Informationen umfasst, die mindestens ein Frequenzband angeben, das von dem Kommunikationsnetzwerk (1) unterstützt wird, und wobei die Informationen ferner ein oder mehrere Netzwerksegmente angeben, die von den jeweiligen Frequenzbändern des mindestens einen Frequenzbands unterstützt werden.

10. Verfahren nach Anspruch 9, wobei die Informationen ferner eine Brandprioritätsreihenfolge des mindestens einen Frequenzbands für die Nutzungsauswahl angeben.

11. Verfahren nach einem der Ansprüche 9-10, wobei die Informationen eine oder mehrere Netzwerkidentitäten angeben, die jedes Frequenzband des mindestens einen Frequenzbands unterstützen, und jede Netzwerkidentität ein oder mehrere Netzwerksegmente definiert, die von der Netzwerkidentität unterstützt werden.

12. Verfahren nach einem der Ansprüche 9-11, wobei die Informationen das eine oder die mehreren Netzwerksegmente in einer Liste des jeweiligen Frequenzbands des mindestens einen Frequenzbands angeben.

13. Verfahren nach einem der Ansprüche 9-12, wobei die Nachricht in einer dedizierten Übertragung während einer Freigabe einer Verbindung zwischen der drahtlosen Vorrichtung (10) und dem Funknetzwerkknoten (12) an die drahtlose Vorrichtung (10) übertragen wird.

14. Drahtlose Vorrichtung (10) zur Handhabung der Mobilität der drahtlosen Vorrichtung (10) in einem Kommunikationsnetzwerk (1), wobei das Kommunikationsnetzwerk (1) aufgeteilte Funktionalitätssätze umfasst, wobei jeder Funktionalitätssatz zu einem Netzwerksegment gehört und wobei ein Funktionalitätssatz von anderen Funktionalitätssätzen eines Gesamtfunktionalitätssatzes in dem Kommunikationsnetzwerk (1) getrennt ist, wobei die drahtlose Vorrichtung (10) für Folgendes konfiguriert ist:
Empfangen einer Nachricht von einem Funknetzwerkknoten (12) in dem Kommunikationsnetzwerk, die Informationen umfasst, die mindestens ein Frequenzband angeben, das von dem Kommunikationsnetzwerk (1) unterstützt wird, und wobei die Informationen ferner ein oder mehrere Netzwerksegmente angeben, die von den jeweiligen Frequenzbändern des mindestens einen Frequenzbands unterstützt werden; und
Bestimmen, dass ein Mobilitätsvorgang bezüglich der Auswahl eines Dienstbereiches (16) eines Frequenzbands, das genutzt werden soll, eingeleitet werden soll, wobei die Informationen in der empfangenen Nachricht und zudem zusätzliche Informationen berücksichtigt werden, wobei die zusätzlichen Informationen ein oder mehrere zusätzliche Netzwerksegmente angeben, welche die drahtlose Vorrichtung (10) unterstützen.

15. Funknetzwerkknoten (12) zur Handhabung der Mobilität einer drahtlosen Vorrichtung (10) in einem Kommunikationsnetzwerk (1), wobei das Kommunikationsnetzwerk (1) aufgeteilte Funktionalitätssätze umfasst, wobei jeder Funktionalitätssatz zu einem Netzwerksegment gehört und wobei ein Funktionalitätssatz von anderen Funktionalitätssätzen eines Gesamtfunktionalitätssatzes in dem Kommunikationsnetzwerk (1) getrennt ist, wobei der Funknetzwerkknoten für Folgendes konfiguriert ist:
Übertragen einer Nachricht an die drahtlose Vorrichtung (10), die Informationen umfasst, die mindestens ein Frequenzband angeben, das von dem Kommunikationsnetzwerk (1) unterstützt wird, und wobei die Informationen ferner ein oder mehrere Netzwerksegmente angeben, die von den jeweiligen Frequenzbändern des mindestens einen Frequenzbands unterstützt werden.

## Revendications

1. Procédé effectué par un dispositif sans fil (10) pour la gestion de mobilité du dispositif sans fil (10) dans un réseau de communication (1), lequel réseau de communication (1) comprend des ensembles partitionnés de fonctionnalités, dans lequel chaque ensemble de fonctionnalités appartient à une tranche de réseau et dans lequel un ensemble de fonctionnalités est séparé d'autres ensembles de fonctionnalités parmi un ensemble total de fonctionnalités dans le réseau de communication (1), le procédé comprenant :
- la réception (1401), à partir d'un nœud de réseau radio (12) dans le réseau de communication, d'un message comprenant des informations indiquant au moins une bande de fréquences prise en charge par le réseau de communication (1), et lesquelles informations indiquent en outre une ou plusieurs tranches de réseau prises en charge par des bandes de fréquences respectives de l'au moins une bande de fréquences ; et
- la détermination (1402) de lancer une procédure de mobilité concernant une sélection d'une zone de service (16) et d'une bande de fréquences sur laquelle séjourner, en tenant compte des informations dans le message reçu et également d'informations de prise en charge, lesquelles informations de prise en charge indiquent une ou plusieurs tranches de réseau de prise en charge qui prennent en charge le dispositif sans fil (10).

2. Procédé selon la revendication 1, dans lequel les informations indiquent en outre un ordre de priorité de bande de l'au moins une bande de fréquences pour sélectionner d'y séjourner et l'ordre de priorité de bande est pris en compte lors de la détermination de lancer la procédure de mobilité concernant une sélection de la zone de service de la bande de fréquences sur laquelle séjourner.

3. Procédé selon l'une quelconque des revendications 1 et 2, dans lequel la détermination (1402) comprend la détermination de lancer la procédure de mobilité quand l'au moins une bande de fréquences comprend la bande de fréquences de la zone de service et les informations indiquent que la bande de fréquences de la zone de service prend en charge au moins une tranche de réseau des une ou plusieurs tranches de réseau de prise en charge dans les informations de prise en charge.

4. Procédé selon l'une quelconque des revendications 1 à 3, dans lequel les informations indiquent une ou plusieurs identités de réseau prenant en charge chaque bande de fréquences de l'au moins une bande de fréquences et chaque identité de réseau définit une ou plusieurs tranches de réseau prises en charge par l'identité de réseau.

5. Procédé selon l'une quelconque des revendications 1 à 3, dans lequel les informations indiquent les une ou plusieurs tranches de réseau dans une liste de la bande de fréquences respective de l'au moins une bande de fréquences.

6. Procédé selon l'une quelconque des revendications 1 à 5, dans lequel la procédure de mobilité comprend l'activation d'une ou plusieurs mesures sur la bande de fréquences de la zone de service (16) et la sélection de séjourner sur la zone de service de la fréquence est basée sur les une ou plusieurs mesures.

7. Procédé selon l'une quelconque des revendications 1 à 6, dans lequel le message est reçu dans une transmission dédiée à partir du nœud de réseau radio (12) durant une libération d'une connexion entre le dispositif sans fil (10) et le nœud de réseau radio (12).

8. Procédé selon l'une quelconque des revendications 1 à 7, dans lequel les informations indiquent en outre un ordre de priorité de tranche de chaque tranche de réseau des une ou plusieurs tranches de réseau de l'au moins une bande de fréquences pour sélectionner d'y séjourner et l'ordre de priorité de tranche est pris en compte lors de la détermination de lancer la procédure de mobilité.

9. Procédé effectué par un nœud de réseau radio (12) pour la gestion de mobilité d'un dispositif sans fil (10) dans un réseau de communication (1), lequel réseau de communication (1) comprend des ensembles partitionnés de fonctionnalités, dans lequel chaque ensemble de fonctionnalités appartient à une tranche de réseau et dans lequel un ensemble de fonctionnalités est séparé d'autres ensembles de fonctionnalités parmi un ensemble total de fonctionnalités dans le réseau de communication (1), le procédé comprenant :
- la transmission (1501), au dispositif sans fil (10), d'un message comprenant des informations indiquant au moins une bande de fréquences prise en charge par le réseau de communication (1), et lesquelles informations indiquent en outre une ou plusieurs tranches de réseau prises en charge par des bandes de fréquences respectives de l'au moins une bande de fréquences.

10. Procédé selon la revendication 9, dans lequel les informations indiquent en outre un ordre de priorité de bande de l'au moins une bande de fréquences pour sélectionner d'y séjourner.

11. Procédé selon l'une quelconque des revendications 9 et 10, dans lequel les informations indiquent une ou plusieurs identités de réseau prenant en charge chaque bande de fréquences de l'au moins une bande de fréquences et chaque identité de réseau définit une ou plusieurs tranches de réseau prises en charge par l'identité de réseau.

12. Procédé selon l'une quelconque des revendications 9 à 11, dans lequel les informations indiquent les une ou plusieurs tranches de réseau dans une liste de la bande de fréquences respective de l'au moins une bande de fréquences.

13. Procédé selon l'une quelconque des revendications 9 à 12, dans lequel le message est transmis dans une transmission dédiée au dispositif sans fil (10) durant une libération d'une connexion entre le dispositif sans fil (10) et le nœud de réseau radio (12).

14. Dispositif sans fil (10) pour la gestion de mobilité du dispositif sans fil (10) dans un réseau de communication (1), lequel réseau de communication (1) comprend des ensembles partitionnés de fonctionnalités, dans lequel chaque ensemble de fonctionnalités appartient à une tranche de réseau et dans lequel un ensemble de fonctionnalités est séparé d'autres ensembles de fonctionnalités parmi un ensemble total de fonctionnalités dans le réseau de communication (1), le dispositif sans fil (10) étant configuré pour :
recevoir, à partir d'un nœud de réseau radio (12) dans le réseau de communication, un message comprenant des informations indiquant au moins une bande de fréquences prise en charge par le réseau de communication (1), et lesquelles informations indiquent en outre une ou plusieurs tranches de réseau prises en charge par des bandes de fréquences respectives de l'au moins une bande de fréquences ; et
déterminer de lancer une procédure de mobilité concernant une sélection d'une zone de service (16) et d'une bande de fréquences sur laquelle séjourner, en tenant compte des informations dans le message reçu et également d'informations de prise en charge, lesquelles informations de prise en charge indiquent une ou plusieurs tranches de réseau de prise en charge qui prennent en charge le dispositif sans fil (10).

15. Nœud de réseau radio (12) pour la gestion de mobilité d'un dispositif sans fil (10) dans un réseau de communication (1), lequel réseau de communication (1) comprend des ensembles partitionnés de fonctionnalités, dans lequel chaque ensemble de fonctionnalités appartient à une tranche de réseau et dans lequel un ensemble de fonctionnalités est séparé d'autres ensembles de fonctionnalités parmi un ensemble total de fonctionnalités dans le réseau de communication (1), le nœud de réseau radio étant configuré pour :
transmettre, au dispositif sans fil (10), un message comprenant des informations indiquant au moins une bande de fréquences prise en charge par le réseau de communication (1), et lesquelles informations indiquent en outre une ou plusieurs tranches de réseau prises en charge par des bandes de fréquences respectives de l'au moins une bande de fréquences.
